# EUROPEAN PATENT APPLICATION

(11) **EP 3 128 771 A1**
(43) Date of publication of application: **08.02.2017**
(21) Application number: 16181674.9
(22) Date of filing: 28.07.2016
(51) Int. Cl.: H04W 4/02, H04W 4/00, H04L 29/08

(54) **ELECTRONIC DEVICE AND METHOD FOR PROVIDING SERVICE IN THE ELECTRONIC DEVICE**

(30) Priority: 04.08.2015 KR 20150110129
(71) Applicant: Samsung Electronics Co., Ltd., Suwon-si, Gyeonggi-do 16677 (KR)
(72) Inventor: KIM, Byoung-Joo, 16677 Gyeonggi-do (KR); KIM, Dong-Hoon, 16677 Gyeonggi-do (KR); KIM, Yong-Wook, 16677 Gyeonggi-do (KR); MOON, Dong-Ouk, 16677 Gyeonggi-do (KR); CHOI, Tai-Ho, 16677 Gyeonggi-do (KR)
(74) Representative: Hylarides, Paul Jacques

(57) **Abstract**

An electronic device implements a method for providing a service in the electronic device. The electronic device includes a communication module configured to provide short-range wireless communication, and a control module. The control module is configured to broadcast a service request for a service by short-range wireless communication through the communication module. The control module is configured to receive service information corresponding to the service from at least one external electronic device receiving the service request, and to execute at least one function related to the service based on at least one piece of the service information.

## Description

### TECHNICAL FIELD

The present disclosure relates to an electronic device and a method for providing a service in the electronic device.

### BACKGROUND

Electronic devices can provide a variety of services. For example, a portable electronic device such as a smartphone or a tablet computer has been developed to offer more convenience to a user, with various capabilities. An electronic device may use a function or a service provided by, for example, another electronic device in the vicinity.

Electronic devices may form an indoor or outdoor local network by connecting to one another through wired/wireless communication in a certain area. An electronic device may use a service provided by an adjacent terminal (for example, a service provider) through a wireless personal area network (WPAN) in the form of an ad-hoc network.

Generally, to use a service provided by a service provider, an electronic device may scan service providers and discover a service provided by a personal area network (PAN) including a detected service provider. Further, the electronic device accesses the detected service provider and queries about services provided by a network including the service provider in order to discover an intended service.

Since the electronic device should scan adjacent service providers to use the intended service, the electronic device needs abundant resources such as a battery and a frequency bandwidth. Moreover, the electronic device should perform a service discovery procedure with the detected service provider, thus taking much time.

The above information is presented as background information only to assist with an understanding of the present disclosure. No determination has been made, and no assertion is made, as to whether any of the above might be applicable as prior art with regard to the present disclosure.

### SUMMARY

To address the above-discussed deficiencies, it is a primary object of this disclosure to provide an apparatus and method for acquiring service information about at least one service which is provided by another electronic device by broadcasting information related to an electronic device.

In accordance with an aspect of the present disclosure, there is provided an electronic device. The electronic device includes a communication module for providing short-range wireless communication, and a control module. The control module is configured to broadcast a service request for a service by short-range wireless communication through the communication module, to receive service information corresponding to the service from at least one external electronic device receiving the service request, and to execute at least one function related to the service at least based on the service information.

In accordance with another aspect of the present disclosure, there is provided an electronic device. The electronic device includes a communication module for providing short-range wireless communication, and a control module. The control module is configured to receive a service request for a service broadcasted from an external electronic device by short-range communication through the communication module, to determine service information corresponding to a location of the external electronic device at least based on the service request, and to provide the service information to the external electronic device in relation to the service request.

In accordance with another aspect of the present disclosure, there is provided a computer-readable recording medium recording a program to be executed by a computer. The program includes instructions configured to control an electronic device to perform broadcasting a service request for a service by short-range wireless communication, receiving service information corresponding to the service from at least one external electronic device receiving the service request, and executing at least one function related to the service at least based on the service information.

In accordance with another aspect of the present disclosure, there is provided a computer-readable recording medium recording a program to be executed by a computer. The program includes instructions configured to control an electronic device to perform receiving a service request for a service broadcast from an external electronic device by short-range communication, determining service information corresponding to a location of the external electronic device at least based on the service request, and providing the service information to the external electronic device in relation to the service request.

Other aspects, advantages, and salient features of the disclosure will become apparent to those skilled in the art from the following detailed description, which, taken in conjunction with the annexed drawings, discloses embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a network environment according to various embodiments of the present disclosure;
FIG. 2 illustrates an electronic device according to various embodiments of the present disclosure;
FIG. 3 illustrates a programming module according to various embodiments of the present disclosure;
FIG. 4 illustrates a service providing system according to an embodiment of the present disclosure;
FIG. 5 illustrates an electronic device according to an embodiment of the present disclosure;
FIG. 6 illustrates a method for providing a service in an electronic device according to an embodiment of the present disclosure;
FIG. 7 illustrates a method for providing a service in an electronic device according to an embodiment of the present disclosure;
FIGS. 8A to 8E illustrate example user interface (UI) screens for registering user information in an electronic device according to an embodiment of the present disclosure;
FIGS. 9 through 12 illustrate example methods for providing a service in an electronic device according to various embodiments of the present disclosure;
FIG. 13 illustrates a method for providing information about a wireless fidelity (WiFi) connection service in an electronic device according to an embodiment of the present disclosure;
FIG. 14 illustrates a method for providing information about an order service in an electronic device according to an embodiment of the present disclosure;
FIG. 15 illustrates a method for providing information about a viewing information providing service in an electronic device according to an embodiment of the present disclosure;
FIG. 16 illustrates a method for providing information about a traffic information providing service in an electronic device according to an embodiment of the present disclosure;
FIG. 17 illustrates a service provider according to an embodiment of the present disclosure;
FIGS. 18 and 19 illustrate example methods for providing information about a service in a service provider according to an embodiment of the present disclosure; and
FIG. 20 illustrates a method for providing information about a service in a service information prov iding system according to an embodiment of the present disclosure.

### DETAILED DESCRIPTION

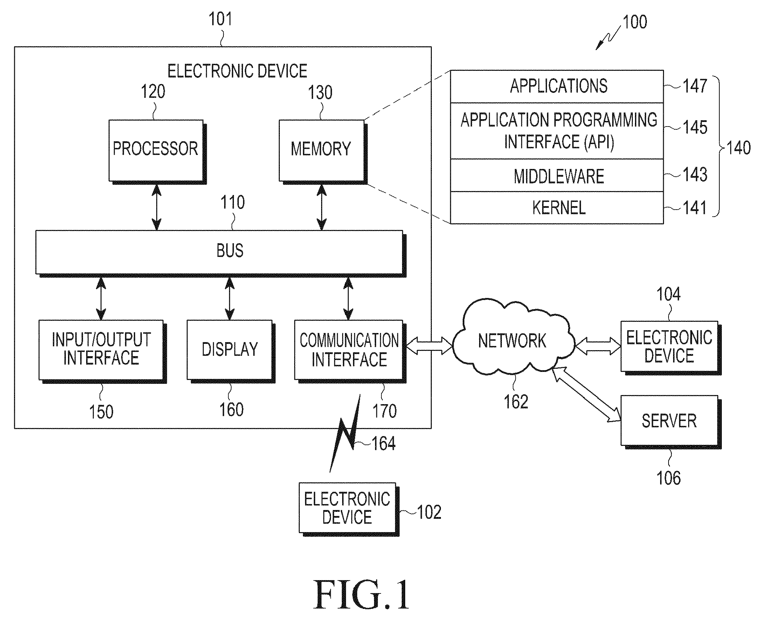

FIGURES 1 through 20, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

Various embodiments of the present disclosure are described with reference to the accompanying drawings. However, the scope of the present disclosure is not intended to be limited to the particular embodiments and it is to be understood that the present disclosure covers all modifications, equivalents, and/or alternatives falling within the scope and spirit of the present disclosure. In relation to a description of the drawings, like reference numerals denote the same components.

In the present disclosure, the term 'have', 'may have', 'include', or 'may include' signifies the presence of a specific feature (for example, number, function, operation, or component such as part), not excluding the presence of one or more other features.

In present disclosure, the term 'A or B', 'at least one of A or/and B', or 'one or more of A or/and B' may cover all possible combinations of enumerated items. For example, 'A or B', 'at least one of A and B', or 'at least one of A or B' may represent all of the cases of (1) inclusion of at least one A, (2) inclusion of at least one B, and (3) inclusion of at least one A and at least one B.

The term as used in the present disclosure, 'first' or 'second' may modify the names of various components irrespective of sequence and/or importance, not limiting the components. These expressions are used to distinguish one component from another component. For example, a first user equipment (UE) and a second UE may indicate different UEs irrespective of sequence or importance. For example, a first component may be referred to as a second component and vice versa without departing the scope of the present disclosure.

When it is stated that a component (for example, a first component) is 'operatively or communicatively coupled with/to' or 'connected to' another component (for example, a second component), it should be understood that the one component is connected to the other component directly or through any other component (for example, a third component). On the other hand, when it is stated that a component (for example, a first component) is 'directly connected to' or 'directly coupled to' another component (for example, a second component), it may be understood that there is no other component (for example, a third component) between the components.

The term 'configured to' as used herein may be replaced with, for example, the term 'suitable for' 'having the capacity to', 'designed to', 'adapted to', 'made to', or 'capable of' under circumstances. The term 'configured to' may not necessarily mean 'specifically designed to' in hardware. Instead, the term 'configured to' may mean that a device may mean 'capable of' with another device or part. For example, 'a processor configured to execute A, B, and C' may mean a dedicated processor (for example, an embedded processor) for performing the corresponding operations or a generic-purpose processor (for example, a central processing unit (CPU) or an application processor (AP)) for performing the operations.

The terms as used in the present disclosure are provided to describe merely specific embodiments, not intended to limit the scope of other embodiments. It is to be understood that singular forms include plural referents unless the context clearly dictates otherwise. Unless otherwise defined, the terms and words including technical or scientific terms used in the following description and claims may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings. When needed, even the terms as defined in the present disclosure may not be interpreted as excluding embodiments of the present disclosure.

An electronic device according to various embodiments of the present disclosure may be at least one of, for example, a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a mobile medical equipment, a camera, or a wearable device. According to various embodiments, the wearable device may be at least one of an accessory type (for example, a watch, a ring, a bracelet, an ankle bracelet, a necklace, glasses, contact lenses, or a head-mounted device (HMD)), a fabric or clothes type (for example, electronic clothes), a body-attached type (for example, a skin pad or a tattoo), or an implantable type (for example, an implantable circuit).

According to some embodiments, an electronic device may be a home appliance. For example, the home appliance may be at least one of, for example, a television (TV), a digital versatile disk (DVD) player, an audio player, a refrigerator, an air conditioner, a vacuum cleaner, an oven, a microwave oven, a washer, an air purifier, a set-top box, a home automation control panel, a security control panel, a TV box (for example, Samsung HomeSync™, Apple TV™, Google TV™, or the like), a game console (for example, Xbox™, PlayStation™, or the like), an electronic dictionary, an electronic key, a camcorder, or an electronic picture frame.

According to other embodiments, an electronic device may be at least one of a medical device (for example, a portable medical meter such as a blood glucose meter, a heart rate meter, a blood pressure meter, or a body temperature meter, a magnetic resonance angiography (MRA) device, a magnetic resonance imaging (MRI) device, a computed tomography (CT) device, an imaging device, an ultrasonic device, or the like), a navigation device, a global navigation satellite system (GNSS), an event data recorder (EDR), a flight data recorder (FDR), an automotive infotainment device, a naval electronic device (for example, a naval navigation device, a gyrocompass, or the like), an avionic electronic device, a security device, an in-vehicle head unit, an industrial or consumer robot, an automatic teller machine (ATM) in a financial facility, a point of sales (POS) device in a shop, or an Internet of things (IoT) device (for example, a lighting bulb, various sensors, an electricity or gas meter, a sprinkler, a fire alarm, a thermostat, a street lamp, a toaster, sports goods, a hot water tank, a heater, or a boiler).

According to some embodiments, an electronic device may be at least one of furniture, part of a building/structure, an electronic board, an electronic signature receiving device, a projector, and various measuring devices (for example, water, electricity, gas or electro-magnetic wave measuring devices). According to various embodiments, an electronic device may be one or a combination of two or more of the foregoing devices. According to some embodiments, an electronic device may be a flexible electronic device. In addition, it will be apparent to one having ordinary skill in the art that an electronic device according to an embodiment of the present disclosure is not limited to the foregoing devices and covers a new electronic device produced along with technology development.

With reference to the attached drawings, an electronic device according to various embodiments will be described below. In the present disclosure, the term 'user' may refer to a person or device (for example, artificial intelligence electronic device) that uses an electronic device.

Referring to FIG. 1, an electronic device 101 in a network environment 100 according to various embodiments is described. The electronic device 101 may include a bus 110, a processor 120, a memory 130, an input/output (I/O) interface 150, a display 160, and a communication interface 170. In some embodiments, at least one of the components may be omitted in the electronic device 101 or a component may be added to the electronic device 101.

The bus 110 may include a circuit that interconnects, for example, the foregoing components 120, 130, 150, 160, and 170 and allows communication (for example, control messages and/or data) between the foregoing components.

The processor 120 may include one or more of a CPU, an AP, or a communication processor (CP). The processor 120 may, for example, execute computation or data processing related to control and/or communication of at least one other component of the electronic device 101. The processor 120 may be called a controller. The processor 120 may incorporate the controller as its part or form the controller.

The memory 130 may include a volatile memory and/or a non-volatile memory. The memory 130 may, for example, store instructions or data related to at least one other component. According to an embodiment, the memory 130 may store software and/or programs 140. The programs 140 may include, for example, a kernel 141, middleware 143, an application programming interface (API) 145, and/or application programs (or applications) 147. At least a part of the kernel 141, the middleware 143, and the API 145 may be called an operating system (OS).

The kernel 141 may control or manage system resources (for example, the bus 110, the processor 120, or the memory 130) that are used in executing operations or functions implemented in other programs such as the middleware 143, the API 145, or the application programs 147. Also, the kernel 141 may provide an interface for allowing the middleware 143, the API 145, or the application programs 147 to access individual components of the electronic device 101 and control or manage system resources.

The middleware 143 may serve as a medium through which the kernel 141 may communicate with, for example, the API 145 or the application programs 147 to transmit and receive data.

Also, the middleware 143 may process one or more task requests received from the application programs 147 according to their priority levels. For example, the middleware 143 may assign priority levels for using system resources (the bus 110, the processor 120, or the memory 130) of the electronic device 101 to at least one of the application programs 147. For example, the middleware 143 may perform scheduling or load balancing for the one or more task requests by processing the one or more task requests according to the priority levels assigned to the at least one application program 147.

The API 145 is an interface that may control functions that the application programs 147 provide at the kernel 141 or the middleware 143. For example, the API 145 may include at least one interface or function (for example, a command) for file control, window control, video processing, or text control.

The I/O interface 150 may, for example, act as an interface that provides a command or data received from a user or an external device to the other component(s) of the electronic device 101. Further, the I/O interface 150 may output a command or data received from the other component(s) of the electronic device 101 to the user or the external device.

The display 160 may include, for example, a liquid crystal display (LCD), a light emitting diode (LED) display, an organic LED (OLED) display, a microelectromechanical systems (MEMS) display, or an electronic paper display. The display 160 may display, for example, various types of content (for example, text, an image, a video, an icon, or a symbol) to the user. The display 160 may include a touch screen and receive, for example, a touch input, a gesture input, a proximity input, or a hovering input through an electronic pen or a user's body part.

The communication interface 170 may establish communication, for example, between the electronic device 101 and an external device (for example, a first external electronic device 102, a second external electronic device 104, or a server 106). For example, the communication interface 170 may be connected to a network 162 by wireless communication or wired communication and communicate with the external device (for example, the second external electronic device 104 or the server 106) over the network 162. The communication interface 170 may include a communication processor (CP), and the CP may be one of a plurality of modules included in the communication interface 170. In an embodiment, the CP may be included in the processor 120.

The wireless communication may be conducted using, for example, at least one of long term evolution (LTE), LTE-advanced (LTE-A), code division multiple access (CDMA), wideband CDMA (WCDMA), universal mobile telecommunication system (UMTS), wireless broadband (WiBro), or global system for mobile communications (GSM), as a cellular communication protocol. The wireless communication may include, for example, short-range communication 164. The short-range communication 164 may be conducted by, for example, at least one of wireless fidelity (WiFi), Bluetooth, near field communication (NFC), or GNSS. GNSS may include, for example, at least one of global positioning system (GPS), global navigation satellite system (Glonass), Beidou navigation satellite system (hereinafter, referred to as 'Beidou'), or Galileo, the European global satellite-based navigation system, according to a region using the GNSS or a used bandwidth. In the present disclosure, the terms 'GPS' and 'GNSS' are interchangeably used with each other. The wired communication may be conducted in conformance to, for example, at least one of universal serial bus (USB), high definition multimedia interface (HDMI), recommended standard (RS-232), or plain old telephone service (POTS). The network 162 may be a telecommunication network, for example, at least one of a computer network (for example, local area network (LAN) or wide area network (WAN)), the Internet, or a telephone network.

Each of the first and second external electronic devices 102 and 104 may be of the same type as or a different type from the electronic device 101. According to an embodiment, the server 106 may include a group of one or more servers. According to various embodiments, all or a part of operations performed in the electronic device 101 may be performed in one or more other electronic devices (for example, the electronic devices 102 and 104) or the server 106. According to an embodiment, if the electronic device 101 is to perform a function or a service automatically or upon request, the electronic device 101 may request at least a part of functions related to the function or the service to another device (for example, the electronic device 102 or 104 or the server 106), instead of performing the function or the service autonomously, or additionally. The other electronic device (for example, the electronic device 102 or 104 or the server 106) may execute the requested function or an additional function and provide a result of the function execution to the electronic device 101. The electronic device 101 may provide the requested function or service based on the received result or by additionally processing the received result. For this purpose, for example, cloud computing, distributed computing, or client-server computing may be used.

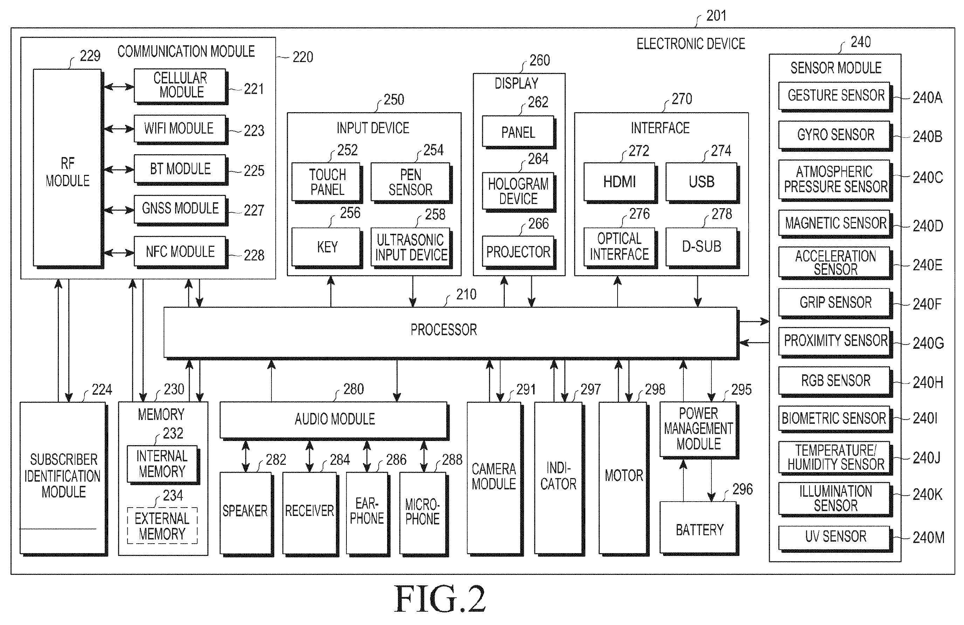

FIG. 2 is a block diagram of an electronic device 201 according to various embodiments. The electronic device 201 may include, for example, the whole or part of the electronic device 101 illustrated in FIG. 1. The electronic device 201 may include at least one processor (for example, AP) 210, a communication module 220, a memory 230, a sensor module 240, an input device 250, and a display 260. The electronic device 201 may further include at least one of a subscriber identification module (SIM) 224, an interface 270, an audio module 280, a camera module 291, a power management module 295, a battery 296, an indicator 297, and a motor 298.

The processor 210 may, for example, control a plurality of hardware or software components that are connected to the processor 210 by executing an OS or an application program and may perform processing or computation of various types of data. The processor 210 may have the same configuration as or a similar configuration to, for example, the processor 120 of FIG. 1. The processor 210 may be implemented, for example, as a system on chip (SoC). According to an embodiment, the processor 210 may further include a graphics processing unit (GPU) and/or an image signal processor. The processor 210 may include at least a part (for example, a cellular module 221) of the components illustrated in FIG. 2. The processor 210 may load a command or data received from at least one of other components (for example, a non-volatile memory), process the loaded command or data, and store various types of data in the non-volatile memory.

The communication module 220 may have the same configuration as or a similar configuration to the communication interface 170 illustrated in FIG. 1. The communication module 220 may include at least one of, for example, the cellular module 221, a WiFi module 223, a Bluetooth (BT) module 225, a GNSS module 227 (for example, a GPS module, a Glonass module, a Beidou module, or a Galileo module), an NFC module 228, and a radio frequency (RF) module 229.

The cellular module 221 may provide services such as voice call, video call, text service, or the Internet service, for example, through a communication network. According to an embodiment, the cellular module 221 may identify and authenticate the electronic device 201 within a communication network, using the SIM (for example, a SIM card) 224. According to an embodiment, the cellular module 221 may perform at least a part of the functionalities of the processor 210. According to an embodiment, the cellular module 221 may include a CP.

Each of the WiFi module 223, the BT module 225, the GNSS module 227, and the NFC module 228 may include, for example, a processor that may process data received or transmitted by the module. According to an embodiment, at least a part (for example, two or more) of the cellular module 221, the WiFi module 223, the BT module 225, the GNSS module 227, or the NFC module 228 may be included in a single integrated chip (IC) or IC package.

The RF module 229 may transmit and receive, for example, communication signals (for example, RF signals). The RF module 229 may include at least one of, for example, a transceiver, a power amplifier module (PAM), a frequency filter, a low noise amplifier (LNA), an antenna, or the like. According to another embodiment, at least one of the cellular module 221, the WiFi module 223, the BT module 225, the GNSS module 227, or the NFC module 228 may transmit and receive RF signals via a separate RF module.

The SIM 224 may include, for example, a card including the SIM and/or an embedded SIM. The SIM 224 may include a unique identifier (for example, integrated circuit card identifier (ICCID)) or subscriber information (for example, international mobile subscriber identity (IMSI)).

The memory 230 (for example, the memory 130) may include, for example, an internal memory 232 and/or an external memory 234. The internal memory 232 may be at least one of, for example, a volatile memory (for example, dynamic RAM (DRAM), static RAM (SRAM), or synchronous dynamic RAM (SDRAM)), and a non-volatile memory (for example, one time programmable ROM (OTPROM), programmable ROM (PROM), erasable and programmable ROM (EPROM), electrically erasable and programmable ROM (EEPROM), mask ROM, flash ROM, flash memory (for example, NAND flash memory, or NOR flash memory), a hard drive, and a solid state driver (SSD).

The external memory 234 may further include a flash drive such as a compact flash (CF) drive, a secure digital (SD), a micro secure digital (micro-SD), a mini secure digital (mini-SD), an extreme digital (xD), a multi-media card (MMC), or a memory stick. The external memory 234 may be operatively and/or physically coupled to the electronic device 201 via various interfaces.

The sensor module 240 may, for example, measure physical quantities or detect operational states of the electronic device 201, and convert the measured or detected information into electric signals. The sensor module 240 may include at least one of, for example, a gesture sensor 240A, a gyro sensor 240B, an atmospheric pressure sensor 240C, a magnetic sensor 240D, an accelerometer sensor 240E, a grip sensor 240F, a proximity sensor 240G, a color sensor (for example, a red, green, blue (RGB) sensor) 240H, a biometric sensor 240I, a temperature/humidity sensor 240J, an illumination sensor 240K, or an ultra violet (UV) sensor 240M. Additionally or alternatively, the sensor module 240 may include, for example, an electrical-nose (E-nose) sensor, an electromyogram (EMG) sensor, an electroencephaloeram (EEG) sensor, an electrocardiogram (ECG) sensor, an infrared (IR) sensor, an iris sensor, and/or a finger print sensor. The sensor module 240 may further include a control circuit for controlling one or more sensors included therein. According to some embodiments, the electronic device 201 may further include a processor configured to control the sensor module 240, as a part of or separately from the processor 210. Thus, while the processor 210 is in a sleep state, the control circuit may control the sensor module 240.

The input device 250 may include, for example, a touch panel 252. The input device 250 may further include at least one of a (digital) pen sensor 254, a key 256, or an ultrasonic input device 258. The touch panel 252 may operate in at least one of, for example, capacitive, resistive, infrared, and ultrasonic schemes. The touch panel 252 may further include a control circuit. The touch panel 252 may further include a tactile layer to thereby provide haptic feedback to the user.

The (digital) pen sensor 254 may include, for example, a detection sheet which is a part of the touch panel or separately configured from the touch panel. The key 256 may include, for example, a physical button, an optical key, or a keypad. The ultrasonic input device 258 may sense ultrasonic signals generated by an input tool using a microphone (for example, a microphone 288), and identify data corresponding to the sensed ultrasonic signals.

The display 260 (for example, the display 160) may include a panel 262. The display 260 may further include a hologram device 264 and/or a projector 266. The panel 262 may have the same configuration as or a similar configuration to the display 160 illustrated in FIG. 1. The panel 262 may be configured to be, for example, flexible, transparent, or wearable. The panel 262 and the touch panel 252 may be implemented as a single module. The hologram device 264 may utilize the interference of light waves to provide a three-dimensional image in empty space. The projector 266 may display an image by projecting light on a screen. The screen may be positioned, for example, inside or outside the electronic device 201. According to an embodiment, the display 260 may further include a control circuit for controlling the panel 262, the hologram device 264, or the projector 266.

The interface 270 may include at least one of, for example, an HDMI 272, a USB 274, an optical interface 276, or a D-subminiature (D-sub) 278. The interface 270 may be included, for example, in the communication interface 170 illustrated in FIG. 1. Additionally or alternatively, the interface 270 may include, for example, a mobile high-definition link (MHL) interface, an SD/multimedia card (MMC) interface, or an infrared data association (IrDA) interface.

The audio module 280 may, for example, convert a sound to an electrical signal, and vice versa. At least a part of the components of the audio module 280 may be included, for example, in the I/O interface 150 illustrated in FIG. 1. The audio module 280 may process sound information input into, or output from, for example, a speaker 282, a receiver 284, an earphone 286, or the microphone 288.

The camera module 291 may capture, for example, still images and a video. According to an embodiment, the camera module 291 may include one or more image sensors (for example, a front sensor or a rear sensor), a lens, an image signal processor (ISP), or a flash (for example, an LED or a xenon lamp).

The power management module 295 may manage power of, for example, the electronic device 201. According to an embodiment, the power management module 295 may include a power management integrated circuit (PMIC), a charger IC, or a battery or fuel gauge. The PMIC may adopt wired and/or wireless charging. The wireless charging may be performed, for example, in a magnetic resonance scheme, a magnetic induction scheme, or an electromagnetic wave scheme, and may further include an additional circuit for wireless charging, for example, a coil loop, a resonance circuit, or a rectifier. The battery gauge may measure, for example, a charge level, a voltage while charging, current, or temperature of the battery 296. The battery 296 may include, for example, a rechargeable battery and/or a solar battery.

The indicator 297 may indicate specific states of the electronic device 201 or a part of the electronic device 201 (for example, the processor 210), for example, boot status, message status, or charge status. The motor 298 may convert an electrical signal into a mechanical vibration and generate vibrations or a haptic effect. While not shown, the electronic device 201 may include a processing device for supporting mobile TV (for example, a GPU). The processing device for supporting mobile TV may process media data compliant with, for example, digital multimedia broadcasting (DMB), digital video broadcasting (DVB), or MediaFLOTM.

Each of the above-described components of the electronic device may include one or more parts and the name of the component may vary with the type of the electronic device. According to various embodiments, the electronic device may be configured to include at least one of the afore-described components. Some component may be omitted from or added to the electronic device. According to various embodiments, one entity may be configured by combining a part of the components of the electronic device, to thereby perform the same functions of the components prior to the combining.

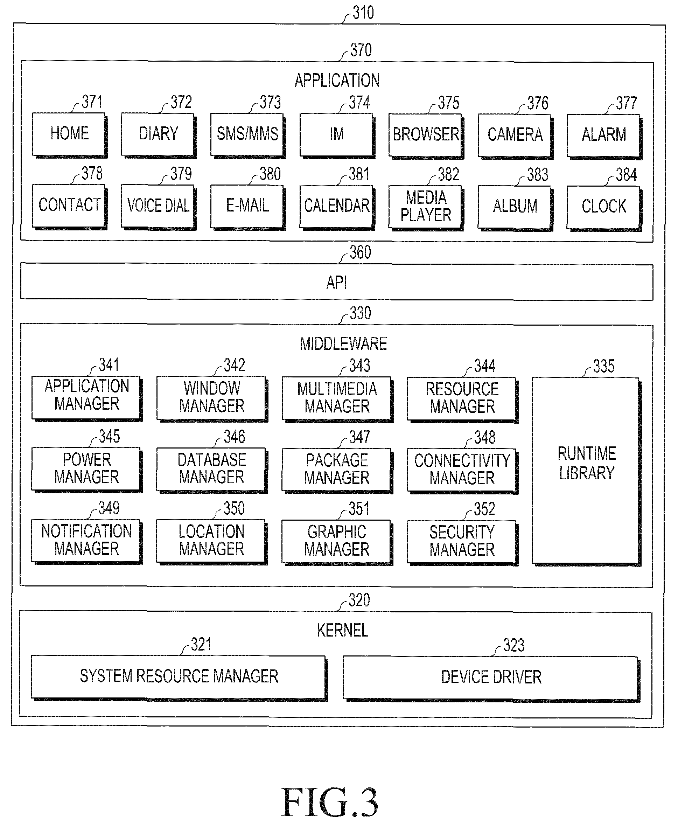

FIG. 3 is a block diagram of a programming module according to various embodiments of the present disclosure. According to an embodiment, a programming module 310 (for example, a program 140) may include an OS that controls resources related to an electronic device (for example, the electronic device 101) and/or various applications executed on the OS (for example, the application programs 147). For example, the OS may be Android, iOS, Windows, Symbian, Tizen, Bada, or the like.

The programming module 310 may include a kernel 320, middleware 330, an Application Programming Interface (API) 360, and/or applications 370. At least a part of the programming module 310 may be preloaded on the electronic device or downloaded from an external electronic device (for example, the electronic device 102 or 104, or the server 106).

The kernel 320 (for example, the kernel 141) may include, for example, a system resource manager 321 and/or a device driver 323. The system resource manager 321 may control, allocate, or deallocate system resources. According to an embodiment, the system resource manager 321 may include at least one of a process manager, a memory manager, or a file system manager. The device driver 323 may include, for example, a display driver, a camera driver, a Bluetooth driver, a shared memory driver, a USB driver, a keypad driver, a WiFi driver, an audio driver, or an inter-process communication (IPC) driver.

The middleware 330 may, for example, provide a function required commonly for the applications 370 or provide various functionalities to the applications 370 through the API 360 so that the applications 370 may efficiently use limited system resources available within the electronic device. According to an embodiment, the middleware 330 (for example, the middleware 143) may include at least one of a runtime library 335, an application manager 341, a window manager 342, a multimedia manager 343, a resource manager 344, a power manager 345, a database manager 346, a package manager 347, a connectivity manager 348, an advertisement manager 349, a location manager 350, a graphic manager 351, or a security manager 352.

The runtime library 335 may include, for example, a library module that a complier uses to add a new function in a programming language during execution of an application 370. The runtime library 335 may perform input/output management, memory management, a function related to arithmetic function, or the like.

The application manager 341 may manage, for example, the life cycle of at least one of the applications 370. The window manager 342 may manage GUI resources used for a screen. The multimedia manager 343 may determine formats required to play back various media files and may encode or decode a media file using a CODEC suitable for the format of the media file. The resource manager 344 may manage resources such as a source code of at least one of the applications 370, a memory, or storage space.

The power manager 345 may, for example, manage a battery or a power source by operating in conjunction with a basic input/output system (BIOS) and may provide power information required for an operation of the electronic device. The database manager 346 may generate, search, or modify a database for at least one of the applications 370. The package manager 347 may manage installation or update of an application distributed as a package file.

The connectivity manager 348 may manage, for example, wireless connectivity of WiFi, Bluetooth, or the like. The advertisement manager 349 may indicate or advertise an event such as message arrival, a schedule, a proximity alarm, or the like in a manner that does not bother a user. The location manager 350 may mange position information about the electronic device. The graphic manager 351 may manage graphical effects to be provided to the user or related user interfaces. The security manager 352 may provide an overall security function required for system security, user authentication, or the like. In an embodiment, if the electronic device (for example, the electronic device 101) has a telephony function, the middleware 330 may further include a telephony manager to manage a voice or video call function of the electronic device.

A new middleware module may be created and used by combining various functions of the above-described component modules in the middleware 330. The middleware 330 may provide a customized module for each OS type in order to provide differentiated functions. In addition, the middleware 330 may dynamically delete a part of the existing components or add a new component.

The API 360 (for example, the API 145) is, for example, a set of API programming functions, which may be configured differently according to an OS. For example, in the case of Android or iOS, one API set may be provided per platform, whereas in the case of Tizen, two or more API sets may be provided per platform.

The applications 370 (for example, the application programs 147) may include, for example, one or more applications capable of providing functions such as home 371, dialer 372, short message service/multimedia messaging service (SMS/MMS) 373, Instant message (IM) 374, browser 375, camera 376, alarm 377, contacts 378, voice dial 379, email 380, calendar 381, media player 382, album 383, or clock 384, health care (for example, measurement of an exercise amount or a glucose level), or providing of environment information (for example, information about atmospheric pressure, humidity, or temperature).

According to an embodiment, the applications 370 may include an application (for the convenience of description, referred to as 'information exchange application') supporting information exchange between the electronic device (for example, the electronic device 101) and an external electronic device (the electronic device 102 or 104). The information exchange application may include, for example, a notification relay application for transmitting specific information to the external electronic device or a device management application for managing the external electronic device.

For example, the notification relay application may include a function of transmitting notification information generated from another application (for example, an SMS/MMS application, an email application, a health care application, or an environment information application) to the external electronic device (for example, the electronic device 102 or 104). Also, the notification relay application may, for example, receive notification information from the external electronic device and transmit the received notification information to a user.

The device management application may, for example, manage (for example, install, delete, or update) at least a part of functions of the external electronic device (for example, the electronic device 102 or 104) communicating with the electronic device (for example, turn-on/turn-off of the external electronic device (or a part of its components) or control of the brightness (or resolution) of the display), an application executed in the external electronic device, or a service (for example, a call service or a message service) provided by the external electronic device.

According to an embodiment, the applications 370 may include an application (for example, a health care application of a mobile medical equipment) designated according to a property of the external electronic device (for example, the electronic device 102 or 104). According to an embodiment, the applications 370 may include an application received from an external electronic device (for example, the server 106 or the electronic device 102 or 104). According to an embodiment, the applications 370 may include a preloaded application or a third party application downloadable from a server. The names of components of the programming module 310 according to the embodiment of the present disclosure may vary according to the type of an OS.

According to various embodiments, at least a part of the programming module 310 may be implemented in software, firmware, hardware, or a combination of at least two of them. At least a part of the programming module 310 may be implemented (for example, executed) by the processor (for example, the processor 210). At least a part of the programming module 310 may include, for example, a module, a program, a routine, a set of instructions, or a process to execute one or more functions.

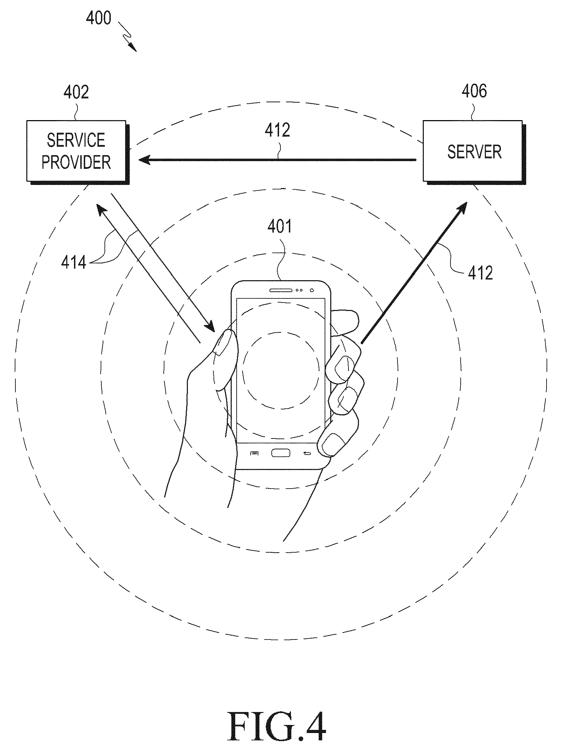

FIG. 4 illustrates a service providing system according to an embodiment of the present disclosure. Referring to FIG. 4, a service providing system 400 may include an electronic device 401 (for example, a UE), a service provider 402, and a server 406. The electronic device 401 may include the whole or part of the electronic device 101 or 201 illustrated in FIG. 1 or FIG. 2. The service provider 402 may include the whole or part of the external electronic device 102 or 104 illustrated in FIG. 1. The server 406 may include the whole or part of the server 106 illustrated in FIG. 1.

The electronic device 401 may communicate with the server 406 through a first network 412. The electronic device 401 may communicate with the service provider 402 through a second network 414. The service provider 402 and the server 406 may communicate with each other through the first network 412, the second network 414, or a third network other than the first and second networks 412 and 414. The first and second networks 412 and 414 may be identical or different.

According to an embodiment, the first network 412 may provide a packet data-based service (or an Internet protocol (IP)-based service). For example, the first network 412 may include at least one of a computer network (for example, LAN or WLAN), the Internet, or a telephony network. Also, the first network 412 may include, for example, a cellular network.

According to an embodiment, the second network 414 may provide short-range communication-based data. For example, the second network 414 may operate in at least one of Bluetooth, NFC, magnetic secure transmission (MST), WiFi, or GNSS.

The electronic device 401 is a UE capable of receiving at least one service from an external device (for example, the service provider 402). To receive information about the at least one service, the electronic device 401 may register user information corresponding to the at least one service to the server 406 through the first network 412. The user information may include, for example, information about the intended service (for example, a service type, and a service reception condition), information about a purchased product, user authentication information, and the like. The user information may also be referred to as service information, a service identifier (ID), or the like.

According to an embodiment, the electronic device 401 may broadcast the user information registered to the server 406. Broadcasting may correspond to, for example, advertising or beaconing.

The server 406 may store the user information received from the electronic device 401 through the first network 412. The server 406 may separately store user information registered by at least one electronic device. The server 406 may make a user information list with the user information registered by the at least one electronic device and store the user information list.

The server 406 may transmit the user information registered by the electronic device 401 to the service provider 402 through a predetermined network (for example, the first network 412 or any network other than the first network 412). The server 406 may transmit the user information list made based on the user information registered by the at least one electronic device to the service provider 402 through a predetermined network (for example, the first network 412 or any network other than the first network 412).

The service provider 402 is a device capable of providing at least one service to the electronic device 401. The service provider 402 may transmit information about a service based on user information about an electronic device (for example, the electronic device 401) registered to the server 406. The service provider 402 may, for example, receive the registered user information (or user information list) from the server 406.

According to an embodiment, the service provider 402 may be authenticated by the server 406 using user information received from the electronic device 401. For example, the server 406 may determine whether to allow the service provider 402 to access the user information registered to the server 406 by checking the user information received from the service provider 402 or an authentication key included in the user information.

According to an embodiment, upon receipt of a service request from the electronic device 401, the service provider 402 may connect to the server 406 and identify a service or user corresponding to the service request. For example, if the service provider 402 receives a service request from the electronic device 401, the service provider 402 may identify a service or user corresponding to the received service request from information received from the server 406 and then stored. For example, upon receipt of a service request from the electronic device 401, the service provider 402 may transmit the received service request to the server 406 and the server 406 may identify a service or user corresponding to the received service request.

According to an embodiment, upon receipt of user information about at least one electronic device (or a user information list) from the server 406 through a predetermined network (for example, the first network 412 or any network other than the first network 412), the service provider 402 may scan its neighborhood in order to discover an electronic device (for example, the electronic device 401) corresponding to the received user information.

According to an embodiment, when the service provider 402 detects user information broadcast by the at least one electronic device 401, the service provider 402 may determine whether the user information received from the server 406 matches the detected user information. For example, the service provider 402 may determine whether the received user information matches the detected user information by comparing identification information of the received user information with identification information of the detected user information.

According to an embodiment, if the identification information of the received user information matches the identification information of the detected user information, the service provider 402 may transmit information about at least one service to the electronic device 401 based on the user information received from the server 406.

For example, if the identification information of the received user information matches the identification information of the detected user information, the service provider 402 may connect to the electronic device 401 using connection information of the user information received from the server 406.

According to an embodiment, the electronic device 401 may receive at least one service registered to the server 406 through the service provider 402.

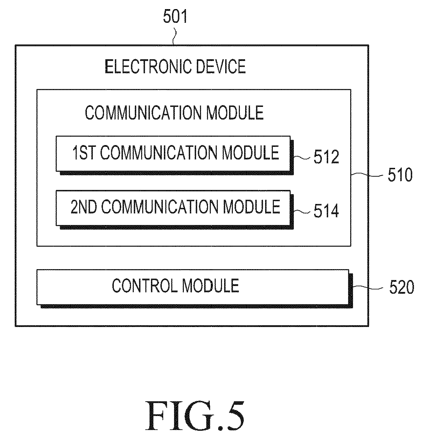

FIG. 5 illustrates an electronic device according to an embodiment of the present disclosure. An electronic device 501 may include the whole or part of the electronic device 401 illustrated in FIG. 4.

Referring to FIG. 5, the electronic device 501 may include a communication module 510 and a control module 520. The communication module 510 may include a first communication module 512 and a second communication module 514. The control module 520 may include at least one of the first and second communication modules 512 and 514, or may be operatively connected to the at least one communication module 512 or 514. The communication module 510 may include at least part of the communication interface 170 illustrated in FIG. 1 or the communication module 220 illustrated in FIG. 2. The control module 520 may include at least part of the processor 120 illustrated in FIG. 1. The communication module 510 may include at least part of the communication interface 170 illustrated in FIG. 1 or the communication module 220 illustrated in FIG. 2.

According to an embodiment, the first communication module 512 may communicate with a first network (for example, the network 162 or the first network 412) which provides a packet data-based service (or an IP-based service).

According to an embodiment, the second communication module 514 may communicate with a second network (for example, by short-range communication 164 or with the second network 414) which provides short-range communication-based data.

While the first and second communication modules 512 and 514 are shown as configured separately in FIG. 5, the present disclosure is not limited thereto. The first and second communication modules 512 and 514 may be incorporated into a single communication module.

The control module 520 may provide overall control to the electronic device 501. According to an embodiment, the control module 520 may include one or more processors. The processors may be provided separately from the first and second communication modules 512 and 514. Or the processors may be incorporated into one of the first and second communication modules 512 and 514 or respectively into the first and second communication modules 512 and 514. Or a first processor may be incorporated into one of the first and second communication modules 512 and 514, while a second processor may be provided separately from the first and second communication modules 512 and 514. For example, the processors may include at least one CP and/or at least one AP.

According to an embodiment, the control module 520 may register at least one intended service to be received to a server (for example, the server 406) through the first communication module 512. The control module 520 may broadcast information about the at least one registered service (for example, user information or service information) through the second communication module 514. The control module 520 may receive information about the at least one service from a service provider (for example, the service provider 402) that has discovered the electronic device 501, using the broadcast user information. The control module 520 may provide the at least one service based on the received information about the at least one service. The control module 520 may execute various functions (for example, output content) using at least part of the information received from the service provider (for example, the service provider 402).

According to an embodiment, the electronic device 501 may include at least one antenna. For example, the electronic device 501 may receive a plurality of pieces of service information from one or more external service providers. The electronic device may, for example, receive one of the plurality of pieces of service information through a first antenna (for example, an NFC antenna) and another piece of service information through a second antenna (for example, a Bluetooth antenna).

According to various embodiments, an electronic device (for example, the electronic device 501) may include a communication module for providing short-range wireless communication, and a control module operatively connected to the communication module. The control module may be configured to broadcast a service request for a service by short-range wireless communication, to receive service information about the service from at least one external electronic device receiving the service request, and to execute at least one function related to the service at least based on the service information.

According to various embodiments, the control module may be configured to register a service ID corresponding to the service to a server.

According to various embodiments, the control module may be configured to connect to the server by communication other than short-range wireless communication.

According to various embodiments, the control module may be configured to detect a message broadcast by the at least one external electronic device.

According to various embodiments, the control module may be configured to switch one of the broadcasting and the detection to the other of the broadcasting and the detection based on a determination that state information related to the electronic device satisfies a predetermined condition.

According to various embodiments, the control module may be configured to broadcast the service request at least based on a determination that state information related to the electronic device satisfies a predetermined condition.

According to various embodiments, the predetermined condition may include at least one of a position, a motion, a time, or a user schedule.

According to various embodiments, the control module may be configured to determine communication coverage in which the service request is transmitted, at least based on the state information.

According to various embodiments, the service request may include a plurality of requests including a first request and a second request, and the control module may be configured to broadcast the first request with first power and broadcast the second request with second power.

According to various embodiments, the electronic device may further include a first antenna and a second antenna, the service information may include a plurality of pieces of service information including first service information and second service information, and the control module may be configured to receive the first service information through the first antenna and the second service information through the second antenna.

According to various embodiments, the at least one external electronic device may include a plurality of external electronic devices including a first external electronic device and a second external electronic device, and the control module may be configured to select at least one of the first external electronic device and the second external electronic device in relation to the function.

According to various embodiments, the control module may be configured to access another external electronic device using the service information.

According to various embodiments, an electronic device (for example, the service provider 402) may include a communication module for providing short-range wireless communication, and a control module operatively connected to the communication module, and the control module may be configured to receive a service request for a service, broadcast by an external electronic device, through short-range wireless communication, to determine service information corresponding to a location of the external electronic device at least based on the service request, and to provide the service information to the external electronic device in relation to the service request.

According to various embodiments, the control module may be configured to broadcast information indicating one or more services which is provided by the electronic device.

According to various embodiments, the control module may be configured to discontinue the broadcasting at least temporarily based on a determination that the service request has been received.

According to various embodiments, the control module may be configured to acquire a first service ID from the service request.

According to various embodiments, the control module may be configured to determine whether the first service ID matches a second service ID registered to a server by the external electronic device before the broadcasting.

According to various embodiments, the service request may include a plurality of requests, and the control module may be configured to select at least a part of the plurality of requests based on state information about the electronic device.

According to various embodiments, the control module may be configured to transmit authentication information to be used for the external electronic device to access another external electronic device.

According to various embodiments, the control module may be configured to wirelessly transmit power to the external electronic device through the electronic device or another electronic device operatively connected to the electronic device.

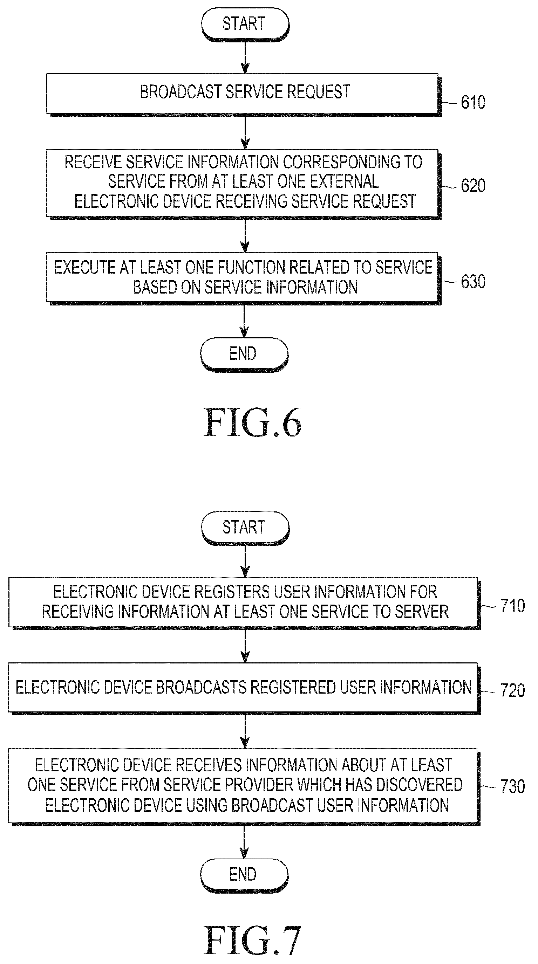

Meanwhile, operations of the control module 520 will be described in greater detail with reference to FIGS. 6 to 12.

FIG. 6 illustrates a method for providing a service in an electronic device according to an embodiment of the present disclosure. The service providing method of an electronic device may include operations 610, 620, and 630. The service providing method of an electronic device may be performed by at least one of an electronic device (for example, the electronic device 401 or 501), a processor (the processor 120 or 210) of the electronic device, and a control module (for example, the control module 520) of the electronic device.

In operation 610, for example, the electronic device may broadcast a service request for a service.

According to an embodiment, the service request may include beacon information, and the electronic device may broadcast at least part of the beacon information.

According to an embodiment, the electronic device may determine whether state information related to the electronic device satisfies a predetermined condition, and may determine whether to broadcast the service request based on a result of the determination. For example, if the state information related to the electronic device satisfies the predetermined condition, the electronic device may broadcast the service request periodically or aperiodically.

According to an embodiment, the predetermined condition may include at least one of a location, a motion, a time, or a user schedule.

According to an embodiment, upon execution of a predetermined application, the electronic device may broadcast the service request periodically or aperiodically.

In operation 620, for example, the electronic device may receive service information corresponding to the service from at least one external electronic device (for example, the service provider 402) which has received the service request.

According to an embodiment, the electronic device may detect a message broadcast by the at least one external electronic device (for example, the service provider 402).

According to an embodiment, the electronic device may acquire the service information corresponding to the service from the detected message.

According to an embodiment, if the operation of broadcasting the service request is a first operation and the operation of detecting the message broadcast by the at least one external electronic device (for example, the service provider 402) is a second operation, the electronic device may determine whether to switch from the first operation to the second operation based on a result of the determination as to whether the state information related to the electronic device satisfies the predetermined condition. For example, if the state information related to the electronic device satisfies the predetermined condition, the electronic device may switch from the first operation to the second operation.

According to an embodiment, the electronic device may perform the first operation and the second operation alternately at least once during a predetermined time interval.

According to an embodiment, the electronic device may broadcast at least one service request in time division. For example, the electronic device may broadcast a first request and a second request simultaneously or individually in time division.

In operation 630, for example, the electronic device may execute at least one function related to the service based on the service information.

According to an embodiment, the electronic device may execute at least one application related to the service based on the service information. The electronic device may provide the service information corresponding to the service to a user through the at least one executed application.

FIG. 7 illustrates a method for providing a service in an electronic device according to an embodiment of the present disclosure. The service providing method of an electronic device may include operations 710, 720, and 730. The service providing method of an electronic device may be performed by at least one of an electronic device (for example, the electronic device 401 or 501), a processor (the processor 120 or 210) of the electronic device, and a control module (for example, the control module 520) of the electronic device.

In operation 710, for example, the electronic device may register user information to a server (for example, the server 406), for use in receiving information about at least one service.

According to an embodiment, the electronic device may generate user information corresponding to the at least one service, and register the user information to the server 406 through a predetermined network (for example, the network 162 or the first network 412).

According to an embodiment, the user information may include identification information about the electronic device, and detailed information about the at least one service.

The identification information is unique information identifying, for example, the electronic device. The identification information may include at least one of, for example, a service set identifier (SSID), a base service set identifier (BSSID), an extended service set identifier (ESSID), a unique user identifier (UUID), a globally unique identifier (GUID), and a locally unique identifier (LUID). Also, the identification information may include one or more IDs for the single electronic device. For example, when the electronic device registers the at least one service to the server 406, the electronic device may generate an ID corresponding to each service and register the ID to the server 406.

The detailed information about the at least one service may include service type information and registration setting information about each service. The service type information indicates a service type that the electronic device intends to receive, including at least one of, for example, connection service (for example, WiFi connection), order service, or information providing service (for example, viewing information providing and traffic information providing). However, the service type is not limited thereto. Rather, various service types that the electronic device intends to receive are available. The registration setting information may include information about at least one of a preset area, branch, shop, and distance range. The registration setting information may be set by a user of the electronic device during the registration. Also, the detailed information may further include action information corresponding to the service type of each service.

According to an embodiment, the user information may further include connection information about the electronic device. The connection information refers to connection information used to connect to the electronic device or connection information used to access information registered to the server (for example, the server 406) in relation to the electronic device.

The connection information is information generated for security setting so that the electronic device or the server 406 may be accessed safely. For example, the connection information may include at least one of, for example, a security key, an authority key, a private key, and a secret key. The connection information may be generated in correspondence with the identification information and include at least one key value for one electronic device. For example, in the case where the electronic device registers identification information including an ID generated for each of the at least one service to the server 406, a key value corresponding to each ID may be generated and registered to the server 406.

In operation 720, for example, the electronic device may broadcast the user information pre-registered to the server 406 in order to receive information about the at least one service.

According to an embodiment, the electronic device may advertise the identification information about the electronic device included in the registered user information periodically or aperiodic ally.

According to an embodiment, the electronic device may advertise a plurality of pieces of identification information including the ID of each of the at least one service, simultaneously or individually. For example, the electronic device may advertise the identification information including the ID of each of the at least one service, simultaneously or individually in time division.

According to an embodiment, the electronic device may individually set transmission power for the identification information including the ID of each of the at least one service, and advertise the identification information with the transmission power. For example, if the electronic device is located in an area having a weak electric field such as inside of a vehicle or underground, the electronic device may advertise the identification information with relatively high transmission power. On the contrary, if the electronic device is located in an area having a strong electric field, the electronic device may advertise the identification information with relatively low transmission power.

For example, the electronic device may set higher transmission power outdoors (for example, on a road) than indoors (for example, inside a building). For example, the electronic device may set transmission power based on the velocity of the electronic device or the user. For example, the electronic device may set higher transmission power when the electronic device or the user moves in a vehicle than when the electronic device or the user moves on foot.

In operation 730, for example, the electronic device may receive information about the at least one service from a service provider (for example, the service provider 402) which has already received and stored the user information pre-registered to the server and discovered the electronic device using the broadcast user information.

According to an embodiment, the electronic device may receive a response message from the service provider 402 in response to the broadcast user information. The response message may include information about the at least one service, which the service provider 402 has generated using the user information preliminarily received from the server 406 and the broadcast user information. The electronic device may acquire the information about the at least one service from the response message received from the service provider 402.

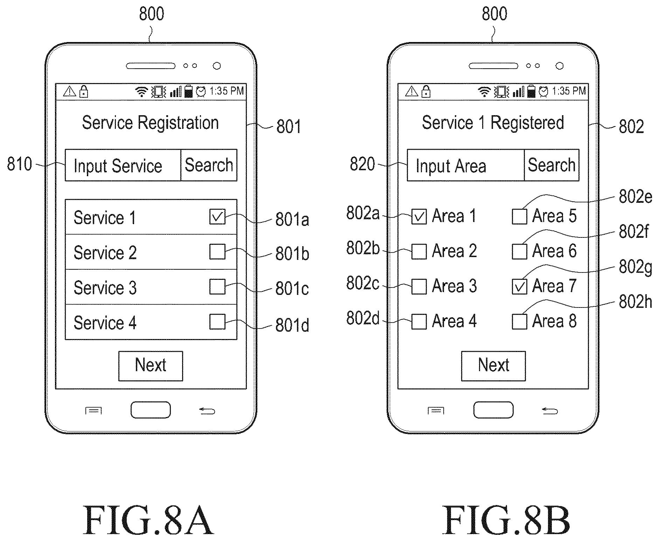

FIGS. 8A to 8E illustrate examples of user interface (UI) screens for registering user information in an electronic device according to an embodiment of the present disclosure. According to an embodiment, an electronic device 800 may include the whole or part of the electronic device 401 illustrated in FIG. 4 or the electronic device 501 illustrated in FIG. 5.

FIG. 8A illustrates a screen 801 on which a service registration application has been executed in an electronic device 800 according to an embodiment of the present disclosure.

The electronic device 800 may execute the service registration application for registration of user information in order to receive information about at least one service. At least one service type (for example, Service 1 to Service 4) which is provided by the electronic device 800 may be displayed on the screen 801.

According to an embodiment, the at least one service type may include at least one of WiFi connection service, wireless power supply service, smart order service, viewing information providing service, or traffic information providing service, which should not be construed as limiting the at least one service type. May other services types are available.

According to an embodiment, a user may purchase a product by an on-line order and pick up the product in an offline store, and the at least one service type may include a service for enabling a product to be picked up in an offline store. In this case, even though the user has not set or registered an additional service type, the user may receive the service by visiting a selected store. For example, when the user purchases a product by an on-line order, the electronic device 800 may broadcast related information. The broadcasting may be performed based on, for example, a location, a time, a user schedule, or an operation mode of the electronic device. Upon receipt of the broadcast information, a service provider (for example, the service provider 402) may perform a procedure for giving the purchased product to the user.

The user of the electronic device 800 may select at least one service type (for example, Service 1) to be registered to a server (for example, the server 406) from among the at least one service type (Service 1 to Service 4) displayed on the screen 801.

According to an embodiment, selection boxes 801a to 801d with which to indicate selection or non-selection of each service type (Service 1 to Service 4) may be displayed along with a list of service types (Service 1 to Service 4) which is provided by the electronic device 800 on the service type registration screen 801. The user may select Service 1 by selecting the check box 801a corresponding to Service 1 to be registered to the server 406. One service type is selected in the illustrated case of FIG. 8A, which should not be construed as limiting. Thus, one or more service types may be selected in the same manner.

Meanwhile, the electronic device 800 may delete or modify user information registered to the server 406 in correspondence with the selected service type, Service 1 by releasing the check box 801a corresponding to Service 1 from the selected state.

FIG. 8B illustrates a screen 802 for selecting an area for the selected service type in the electronic device 800 according to an embodiment of the present disclosure. Once the electronic device 800 selects a service type (for example, Service 1), the electronic device 800 may further select an area for the service type (Service 1) and register the selected area to the server 406.

According to an embodiment, the area selection screen 802 may include a search window 820 for searching for an area in which the service is to be received. The user may input the name of an intended area for the selected service type, Service 1 in the search window 820, for area search. Also, a search result may be displayed in the area selection window 802. For example, at least one area, Area 1 to Area 8 may be displayed along with check boxes 802a to 802h on the area selection screen 802. The user may select at least one area, for example, Area 1 and Area 7 by selecting the check boxes 802a and 802g corresponding to Area 1 and Area 7 to be registered to the server 406, from among the at least one area, Area 1 to Area 8 displayed on the area selection screen 802.

According to an embodiment, a digital map may be displayed on the area selection screen 802. For example, the user may set an area for service reception by selecting the intended area on the digital map.

According to an embodiment, once at least one service (for example, Service 1) is selected, a list of areas Area 1 to Area 8 for the selected service may be displayed along with the check boxes 802a to 802h indicating selection or non-selection of each area on the area selection screen 802. The user may select at least one area Area 1 and Area 7 for the selected service type, Service 1 by selecting the check boxes 802a to 802g corresponding to the areas, Area 1 and Area 7, to be registered to the server 406.

Meanwhile, the electronic device 800 may delete or modify the user information which has been registered to the server 406 in correspondence with the selected areas, Area 1 and Area 7 by releasing at least one of the check boxes 802a and 802g corresponding to the selected areas Area 1 and Area 7 from the selected state.

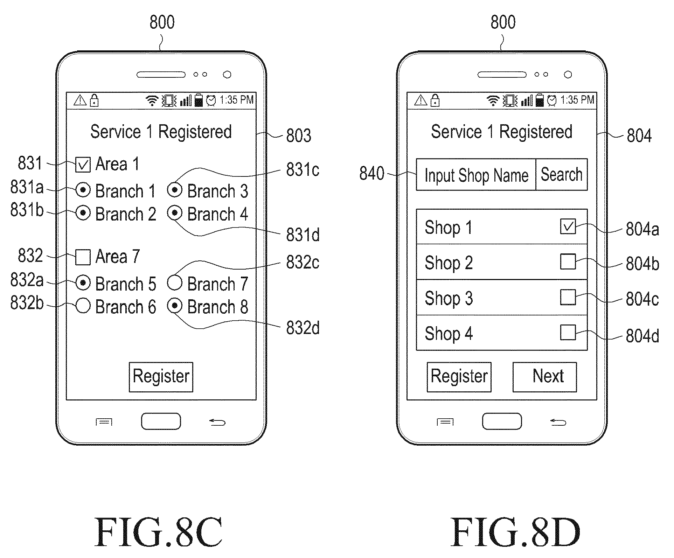

FIG. 8C illustrates a screen 803 on which to select a branch in a selected area in the electronic device 800 according to an embodiment of the present disclosure. Once areas, for example, Area 1 and Area 7 are selected, the electronic device 800 may further select branches in the areas, Area 1 and Area 7. The branch selection screen 803 may display a list of at least one branch, Branch 1 to Branch 8 along with option boxes 831a to 831d and 832a to 832d. The user may select at least one branch (for example, Branch 1 to Branch 4 for Area 1, and Branch 5 and Branch 8 for Area 7) to be registered to the server 406 from among the at least branch, Branch 1 to Branch 8, displayed on the branch selection screen 803.

According to an embodiment, the branch selection screen 803 may provide a list of branches Branch 1 to Branch 4 and Branch 5 to Branch 8 for each of the selected areas, for example, Area 1 and Area 7, together with the option boxes 831a to 831d, and 832a to 832d for selection of the respective branches Branch 1 to Branch 4, and Branch 1 and Branch 4. The user may select at least one branch, for example, Branch 1 to Branch 4, and Branch 5 and Branch 8, for the selected areas, Area 1 and Area 7 by selecting the option boxes 831a to 831d, 832a, and 832d corresponding to the intended branches, Branch 1 to Branch 4 for Area 1, and Branch 5 and Branch 8 for Area 7. If the user wants to select all branches (Branch 1 to Branch 4) in a selected area (for example, Area 1), the user may select the branches (Branch 1 to Branch 4) at once by selecting a check box 831 corresponding to the area, Area 1. If the user wants to select only a part (for example, Branch 5 and Branch 8) of the branches of a selected area (for example, Area 7), the user may leave a check box 832 corresponding to the area, Area 7 unchecked and then select the option boxes 832a and 832d corresponding to the intended branches, Branch 5 and Branch 8.

Meanwhile, the electronic device 800 may delete or modify user information which has been registered to the server 406 in correspondence with the selected branches, Branch 1 to Branch 4 for Area 1, and Branch 5 and Branch 8 for Area 7 by deleting selection marks in the check boxes 831 and 832 and/or the option boxes 831a to 831d, 832a, and 832d corresponding to the at least one selected branch, Branch 1 to Branch 4 for Area 1, and Branch 5 and Branch 8 for Area 7.

According to an embodiment, while not shown, a digital map may be displayed on the branch selection screen 803. For example, the user may select an intended branch from which a service is to be received by selecting the branch on the digital map.

FIG. 8D illustrates a shop selection screen 804 on which to select a shop for a selected service according to an embodiment of the present disclosure. Once at least one service type, for example, Service 1 is selected, the electronic device 800 may select a shop for the selected service type, Service 1.

According to an embodiment, a search window 840 may be included in the shop selection screen 804 so that a shop may be searched for, for reception of the service. The user may input the name of a shop to be selected for the service type, Service 1 in the search window 840, for shop search.

According to an embodiment, a list of at least one shop, for example, Shop 1 to Shop 4 corresponding to the selected service, Service 1 may be displayed together with check boxes 804a to 804d for indicating selection or non-selection of each shop, on the shop selection screen 804. The user may select at least one shop, Shop 1 for the selected service type, Service 1 by selecting the check box 804a corresponding to the at least one shop, Shop 1 to be registered to the server 406 from among the at least one shop, Shop 1 to Shop 4, displayed on the shop selection screen 804.

Meanwhile, the electronic device 800 may delete or modify user information which has been registered to the server 406 in correspondence with the selected shop (Shop 1) by deleting the selection mark in the at least one check box 804a corresponding to the at least one selected shop (Shop 1).

According to an embodiment, an area and/or a branch may further be selected for the selected shop, Shop 1. An area and/or a branch may further be selected for the selected shop, Shop 1 in the same methods as illustrated in FIGS. 8B and 8C.

According to an embodiment, while not shown, a digital map may be displayed on the shop selection screen 804. For example, the user may set an intended shop (for example, Shop 1) in which the service is to be received by selecting the shop on the digital map.

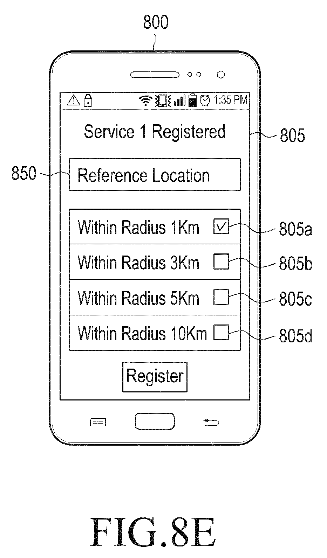

FIG. 8E illustrates a distance range selection screen 805 on which to set a distance range for the selected service in the electronic device 800 according to an embodiment of the present disclosure. Once at least one service type, for example, Service 1 is selected, the electronic device 800 may set a distance range for the service type, Service 1.

According to an embodiment, the distance range selection screen 805 may include a reference location display field 850 that displays a reference location. The reference location display field 850 may display information about the location of a spot in which the user is currently located or information about a location input or set by the user. The distance range selection screen 805 may display a list of at least one distance range, for example, within radius 1km, within radius 3km, within radius 5km, and within radius 10km for the selected service, Service 1, with respect to the location information displayed in the reference position field 850. The user may select a distance range, for example, within radius 1km, to be registered to the server 406 in the list of at least one distance range, within radius 1km, within radius 3km, within radius 5km, and within radius 10km displayed on the distance range selection screen 805 in the electronic device 800.

According to an embodiment, the distance range selection screen 805 may provide check boxes 805a to 805h for selecting the respective distance ranges along with the list of at least one distance range, for example, within radius 1km, within radius 3km, within radius 5km, and within radius 10km for the selected service, for example, Service 1. The user may select an intended distance range, for example, within radius 1km for the selected service type, Service 1 by selecting the check box 805a corresponding to the distance range, within 1km, to be registered to the server 406.

According to an embodiment, while not shown, a digital map may be displayed on the distance selection screen 805. For example, the user may set an intended distance range, for example, within 1km, in which a service is to be received by selecting the distance range on the digital map.

According to an embodiment, the settings (for example, service type, area, branch, shop, or distance range) described with reference to FIGS. 8A to 8E may be automatically selected without user input. For example, if the user registers to a specific service provided by a service provider (for example, the service provider 402), the settings may be automatically selected so that the user may receive the service from the service provider. For example, if the user inputs a schedule to the server 406 or the electronic device 800, the settings may be automatically selected referring to a schedule name, a time, a position, a service type, a specific person, a company name, or a contact included in the schedule.

It has been described that after a service type is selected, an area and a branch are further selected sequentially, or a shop or a distance range is further selected, to which the present disclosure is not limited. Thus, it will be readily understood that an area, a branch, a shop, and a distance may be selected for at least one service by combining the selection methods described with reference to FIGS. 8A to 8E in various orders.

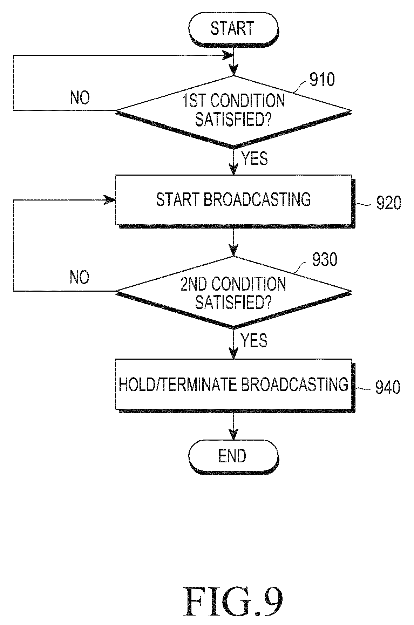

FIG. 9 illustrates a method for providing a service in an electronic device according to an embodiment of the present disclosure. Specifically, FIG. 9 is a detailed flowchart of the operation 720 of broadcasting user information, illustrated in FIG. 7. The service providing method of an electronic device may include operations 910 to 940. The service providing method of an electronic device may be performed by at least one of an electronic device (for example, the electronic device 501), a processor (for example, the processor 120 or 210) of the electronic device, and a control module (for example, the control module 520) of the electronic device.

In operation 910, for example, the electronic device may determine whether a specified first condition (for example, a predetermined condition for triggering broadcasting) is satisfied. If the specified first condition is satisfied, the electronic device may perform operation 920. On the contrary, if the specified first condition is not satisfied, the electronic device may repeat operation 910 periodically or aperiodically.

According to an embodiment, the specified first condition may include at least one of execution of an application corresponding to the at least one service and satisfying of a specified condition for triggering broadcasting. For example, the electronic device may determine whether the application corresponding to the at least one service has been executed, through periodic or aperiodic monitoring. Also, the electronic device may determine whether the specific broadcasting triggering condition has been satisfied, through periodic or aperiodic monitoring.

According to an embodiment, the specified broadcasting triggering condition may be preset by a user. For example, the specified broadcasting triggering condition may include at least one of a time, a location, a motion, a mode, or a user schedule.

In operation 920, for example, the electronic device may periodically or aperiodically broadcast the user information (for example, the identification information about the electronic device) registered to the server (for example, the server 406) in operation 710.

According to an embodiment, upon execution of an application corresponding to the at least one service, the electronic device may start to broadcast user information registered in correspondence with a service related to the executed application.

According to an embodiment, when a specified time elapses, the electronic device may start to broadcast user information registered in correspondence with a service related to the specified time.

According to an embodiment, when entering a specified location, the electronic device may start to broadcast user information registered in correspondence with a service related to the specified location.

According to an embodiment, upon sensing a specified motion, the electronic device may start to broadcast user information registered in correspondence with a service related to the specified motion. The electronic device may sense the specified motion based on motion information acquired from a motion sensor (for example, an accelerometer sensor, a gyro sensor, or a geomagnetic senor). For example, the electronic device may determine whether a motion of the electronic device is the specified motion based on the motion information acquired from the motion sensor. If determining that the motion of the electronic device is the specified motion, the electronic device may start to broadcast the user information registered in correspondence with the service related to the specified motion.

According to an embodiment, if the electronic device is placed in a specified mode, the electronic device may start to broadcast user information registered in correspondence with a service related to the specified mode. For example, the specified mode may be a driving mode, and a service related to the driving mode may be a traffic information providing service. In this case, if the electronic device is placed in the driving mode, the electronic device may start to broadcast user information registered in correspondence with the traffic information providing service.

According to an embodiment, the electronic device may start to broadcast user information registered in correspondence with a service related to a specified user schedule, according to the specified user schedule. For example, if it is time to start a meeting according to the specified user schedule, the electronic device may start to broadcast user information registered in correspondence with a service related to the meeting.

In operation 930, for example, the electronic device may determine whether a specified second condition (for example, a predetermined condition for holding/terminating broadcasting) is satisfied. If the specified second condition is satisfied, the electronic device may perform operation 940. On the contrary, if the specified second condition is not satisfied, the electronic device may repeat operation 920 periodically or aperiodically.

According to an embodiment, the specified second condition may include at least one of holding/terminating the application corresponding to the at least one service and satisfying the specified broadcasting holding/terminating condition. For example, the electronic device may determine whether the application corresponding to the at least one service has been held/terminated, through periodic or aperiodic monitoring. Also, the electronic device may determine whether the specified broadcasting holding/terminating condition has been satisfied, through periodic or aperiodic monitoring.

According to an embodiment, the condition for holding/terminating broadcasting may be preset by a user. For example, the broadcasting holding/terminating condition may include at least one of a time, a location, a motion, a mode, or a user schedule.

In operation 940, for example, the electronic device may hold/terminate the broadcasting of the user information (for example, the identification information about the electronic device) performed in operation 920.

According to an embodiment, upon holding/termination of an application corresponding to the at least one service, the electronic device may hold/terminate broadcasting of user information registered in correspondence with a service related to the held/terminated application.

According to an embodiment, when a specified time elapses, the electronic device may hold/terminate broadcasting of user information registered in correspondence with a service related to the specified time.

According to an embodiment, when the electronic device moves from a specified location, the electronic device may hold/terminate broadcasting of user information registered in correspondence with a service related to the specified location.

According to an embodiment, upon sensing a specified motion, the electronic device may hold/terminate broadcasting of user information registered in correspondence with a service related to the specified motion. For example, if the electronic device determines that a motion of the electronic device is the specified motion, the electronic device may hold/terminate the broadcasting of the user information registered in correspondence with the service related to the specified motion. For example, the specified motion may be a stationary motion which is a motion (movement) not sensed for a predetermined time, and a service related to the stationary motion may be a service of enabling the electronic device not to receive at least one service related to the stationary motion. In this case, if a motion of the electronic device is the specified stationary motion, the electronic device may hold/terminate broadcasting of user information registered in correspondence with a service related to the specified stationary motion.

According to an embodiment, if the electronic device is set to a specified mode, the electronic device may hold/terminate broadcasting of user information registered in correspondence with a service related to the specified mode. For example, the predetermined mode may be a flight mode or a blocking mode, and a service related to the flight mode or the blocking mode may be a service of enabling the electronic device not to receive at least one service related to the flight mode or the blocking mode. In this case, if the electronic device is set to the flight mode or the blocking mode, the electronic device may hold/terminate broadcasting of user information registered in correspondence with a service related to the flight mode or the blocking mode.

According to an embodiment, the electronic device may hold/terminate broadcasting of user information registered in correspondence with a service related to a specified user schedule, according to the specified user schedule. For example, if it is time to end a meeting as scheduled, the electronic device may hold/terminate broadcasting of user information registered in correspondence with a service related to the meeting.

According to an embodiment, upon receipt of a response message from a service provider (for example, the service provider 402) in response to the user information (for example, the identification information) broadcast by the electronic device, the electronic device may hold/terminate the broadcasting of the user information registered in correspondence with the service related to the user information.

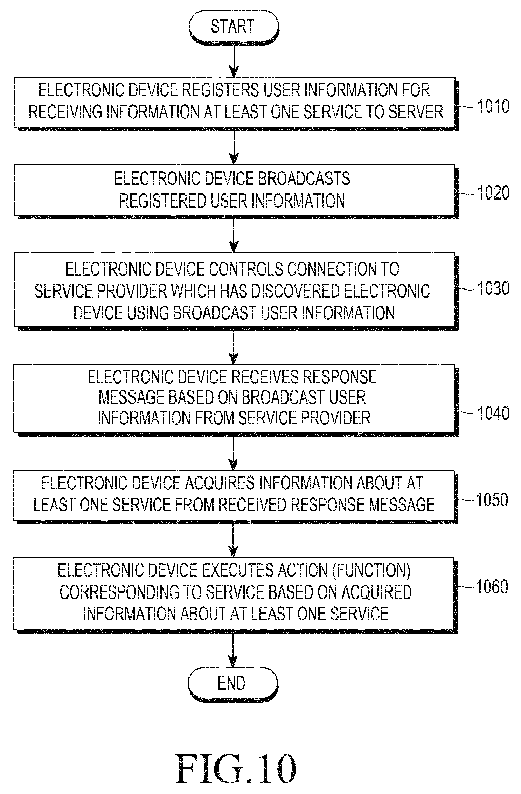

FIG. 10 illustrates a method for providing a service in an electronic device according to an embodiment of the present disclosure. The service providing method of an electronic device may include operations 1010 to 1060. The service providing method of an electronic device may be performed by at least one of the electronic device (for example, the electronic device 401 or 501), a processor (the processor 120 or 210) of the electronic device, and a control module (for example, the control module 520) of the electronic device.

In operation 1010, for example, the electronic device may register user information to a server (for example, the server 406), for use in receiving information about at least one service. For a detailed description of operation 1010, refer to the description of operation 710 illustrated in FIG. 7.

In operation 1020, for example, the electronic device may broadcast the user information pre-registered to the server 406 to receive information about the at least one service. For a detailed description of operation 1020, refer to the description of operation 720 illustrated in FIG. 7 and operations 910 to 940 illustrated in FIG. 9.

In operation 1030, for example, the electronic device may receive and store the registered user information from the server 406 in advance, and control connection to a service provider (for example, the service provider 402) which has discovered the electronic device using the broadcast user information, based on a connection request message received from the service provider.

According to an embodiment, the electronic device may receive connection information about the electronic device corresponding to the broadcast user information from the service provider 402. The electronic device may control connection to the service provider 402 based on the received connection information about the electronic device.

In operation 1040, for example, the electronic device may receive a response message based on the broadcast user information from the service provider 402.

According to an embodiment, the response message may include information about the at least one service.

In operation 1050, for example, the electronic device may acquire information about the at least one service from the received response message.

According to an embodiment, the information about the at least one service may include action information and service information about the at least one service type.

The action information is information about an action (or function) executed in correspondence with the at least one service type. The action information may include, for example, at least one of action information for connectivity to at least one external electronic device, action information for payment, viewing information, or action information for information acquisition such as acquisition of traffic information. However, the action information is not limited to these pieces of information, and may include all of various pieces of action information corresponding to information about at least one service that the electronic device is to receive.

According to an embodiment, the electronic device may acquire a plurality of pieces of service information from at least one response message. The at least one response message may be received from a plurality of external devices including a first external device (for example, the service provider 402) and a second external device. The electronic device may select at least part (service information or services) of the plurality of service information acquired from the at least one response message based on a predetermined condition.

For example, the electronic device may select part of the same or similar service information according to predetermined priority levels. For example, the electronic device may select service information according to at least one of the type of a service provider, the distance between the electronic device and the service provider, cost, a discount rate, the presence or absence of a coupon, awareness or non-awareness of a previously used service, a preference degree of a user or another user, or the like.

For example, the electronic device may select at least one of a first external device (for example, the service provider 402) and a second external device according to the distances of the external devices to the electronic device. For example, the electronic device may select, as a service provider, an electronic device that is providing a service to another electronic device related to the electronic device (for example, an electronic device of a family or a partner). For example, the electronic device may select at least a part of a plurality of electronic devices as a service provider according to the magnitude of reception power (for example, wireless power). For example, the electronic device may select at least a part of a plurality of electronic devices as a service provider based on at least one of a route, destination, speed, and the like of the electronic device.

In operation 1060, the electronic device may provide the acquired information about the at least one service by executing an action (or function) corresponding to the at least one service based on the acquired information about the at least one service.

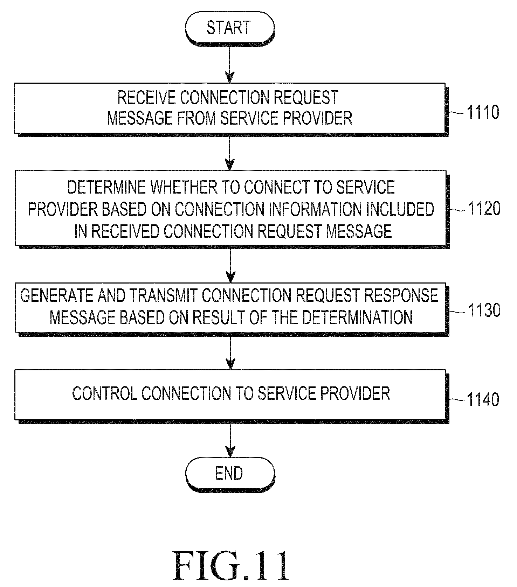

FIG. 11 illustrates an example method for providing a service in an electronic device according to an embodiment of the present disclosure. FIG. 11 is a detailed flowchart of the connection control operation 1030 performed with the service provider (for example, the service provider 402) illustrated in FIG. 10. The service providing method of an electronic device may include operations 1110 to 1140. The service providing method of an electronic device may be performed by at least one of an electronic device (for example, the electronic device 401 or 501), a processor (the processor 120 or 210) of the electronic device, and a control module (for example, the control module 520) of the electronic device.

In operation 1110, for example, the electronic device may receive a connection request message from the service provider 402, in correspondence with broadcast user information.

According to an embodiment, the electronic device may receive a connection request message including connection information included in the user information from the service provider which has already received the connection information of the user information from a server (for example, the server 406) and stored the received connection information. The connection request message may include connection information about the electronic device corresponding to identification information included in the broadcast user information. For example, the service provider 402 may transmit the connection request message including the connection information about the electronic device corresponding to the identification information about the electronic device included in the broadcast user information to the electronic device, using the user information already received from the server 406 and then stored (for example, the identification information about the electronic device, the connection information about the electronic device, and service type information corresponding to the at least one service). Accordingly, the electronic device may receive the connection request message including the connection information about the electronic device corresponding to the broadcast user information from the service provider 402.

In operation 1120, for example, the electronic device may determine whether to connect to the service provider 402, based on the connection information about the electronic device included in the received connection request message.

According to an embodiment, the electronic device may determine whether the received connection information is valid by comparing the connection information received from the service provider 402 with registered connection information about the electronic device. The electronic device may determine whether to connect to the service provider 402 according to a result of the above determination. For example, if the received connection information matches the connection information registered by the electronic device, the electronic device may perform a connection procedure with the service provider 402, determining that the received connection information is valid. On the contrary, if the received connection information does not match the connection information registered by the electronic device, the electronic device may not perform the connection procedure with the service provider 402, determining that the received connection information is not valid.

In operation 1130, for example, the electronic device may generate a connection request response message based on a result of the determination as to whether to connect to the service provider 402 and transmit the connection request response message to the service provider 402.

According to an embodiment, if the electronic device determines that the received connection information is valid, the electronic device may generate a connection request response message including connection accept information indicating acceptance of connection to the service provider 402. The electronic device may transmit the generated connection request response message to the service provider 402.

According to an embodiment, if the electronic device determines that the received connection information is not valid, the electronic device may generate a connection request response message including connection reject information indicating rejection of connection to the service provider 402. The electronic device may transmit the generated connection request response message to the service provider 402.

In operation 1140, for example, if the electronic device determines that the received connection information is valid in operation 1120, the electronic device may control connection to the service provider 402 using the received connection information.

According to an embodiment, if the electronic device generates a connection request response message including connection accept information in operation 1130, the electronic device may perform connection to the service provider.

On the contrary, if the electronic device generates a connection request response message including connection reject information in operation 1130, the electronic device may not perform connection to the service provider.

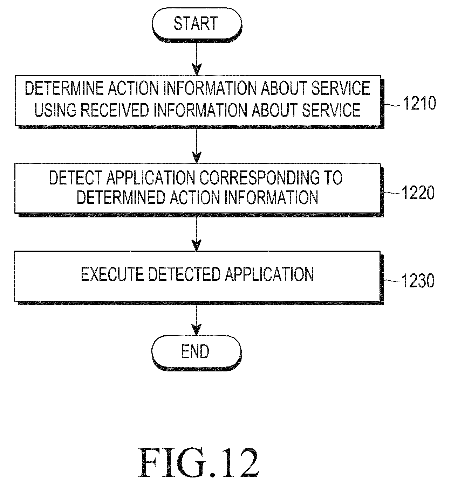

FIG. 12 illustrates a method for providing a service in an electronic device according to an embodiment of the present disclosure. FIG. 12 is a detailed flowchart of the operation 1060 for providing information about at least one service, illustrated in FIG. 10. The service providing method of an electronic device may be performed by at least one of an electronic device (for example, the electronic device 401 or 501), a processor (the processor 120 or 210) of the electronic device, and a control module (for example, the control module 520) of the electronic device.

In operation 1210, for example, the electronic device may determine action (or function) information about the at least one service type based on the received information about the at least one service type.

In operation 1220, for example, the electronic device may search for at least one application corresponding to the determined action information.

According to an embodiment, the electronic device may search for at least one application per service type. For example, if the electronic device receives information about an order service, the electronic device may search for an application for paying an order together with an application for providing coupon information provided by the service provider 402 during ordering.

In operation 1230, for example, the electronic device may provide a user with the received information about the at least one service by executing the at least one detected application.

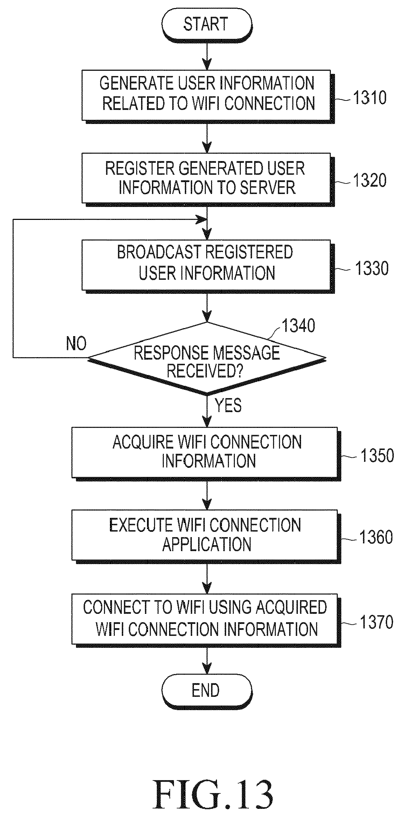

FIG. 13 illustrates a method for providing information about a WiFi connection service in an electronic device according to an embodiment of the present disclosure. The method for providing information about a WiFi connection service in an electronic device may include operations 1310 to 1370. The method for providing information about a WiFi connection service in an electronic device may be performed by at least one of an electronic device (for example, the electronic device 401 or 501), a processor (the processor 120 or 210) of the electronic device, and a control module (for example, the control module 520) of the electronic device.

In operation 1310, for example, the electronic device may generate user information related to WiFi connection.

According to an embodiment, the user information related to WiFi connection may include identification information about the electronic device (or the WiFi connection service), connection information, and detailed information about the WiFi connection service (for example, service type information and user-set registration setting information).

In operation 1320, for example, the electronic device may register the generated user information to a predetermined WiFi connection-related server (for example, the server 406) through a predetermined network (for example, the network 162 or the first network 412).

According to an embodiment, when the electronic device registers the user information, the electronic device may register the user information by area, branch, shop, and distance range according to user selection. During the registration, at least one area, branch, shop, and distance range may be set per service.

In operation 1330, for example, the electronic device may broadcast the registered user information periodically or aperiodically.

According to an embodiment, the electronic device may advertise identification information corresponding to the electronic device (or the WiFi service) included in the registered user information.

In operation 1340, for example, the electronic device may determine whether a response message has been received in response to the broadcast user information. Upon receipt of the response message, the electronic device may perform operation 1350, and if the electronic device has not received the response message, the electronic device may repeat operation 1330.

According to an embodiment, the received response message may include connection information about the electronic device and information about the WiFi connection service.

In operation 1350, for example, the electronic device may acquire information about the WiFi connection service (for example, action information about the service type and WiFi connection information) from the received response message.

According to an embodiment, the WiFi connection information may include an ID and a password (PW) of a predetermined WiFi connection device (not shown), provided by a service provider (for example, the service provider) set by area, branch, shop, and distance range during registration of the user information.

In operation 1360, for example, the electronic device may execute an application related to WiFi connection based on the acquired service information.

According to an embodiment, the electronic device may determine action information (for example, a connection action) about the WiFi connection service using the information about the WiFi connection service.

According to an embodiment, the electronic device may execute an application (for example, a WiFi connection application) corresponding to the determined action information (connection action).

In operation 1370, for example, the electronic device may access WiFi through a predetermined WiFi connection device (not shown) using the acquired WiFi connection information (for example, the WiFi ID and PW).

Operations of at least a part of various embodiments may be performed to receive any other service (for example, a wireless power supply service). For example, the operations described with reference to FIG. 12 or similar operations may be performed to connect the electronic device to a wireless power supply device.

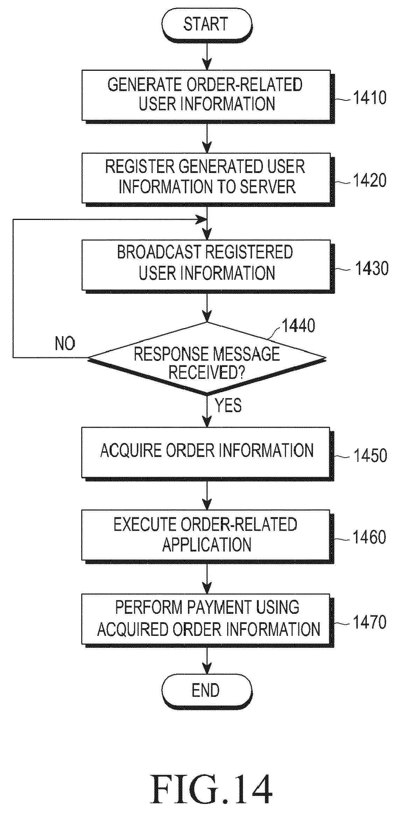

FIG. 14 illustrates a method for providing information about an order service in an electronic device according to an embodiment of the present disclosure. The method for providing information about an order service in an electronic device may include operations 1410 to 1470. The method for providing information about an order service in an electronic device may be performed by at least one of an electronic device (for example, the electronic device 401 or 501), a processor (the processor 120 or 210) of the electronic device, and a control module (for example, the control module 520) of the electronic device.

In operation 1410, for example, the electronic device may generate user information related to a smart order.

According to an embodiment, the user information related to the smart order may include identification information about the electronic device (or the smart order service), connection information, and detailed information about the order service (for example, service type information and user-set registration setting information).

In operation 1420, for example, the electronic device may register the generated user information to a predetermined smart order-related server (for example, the server 406) through a predetermined network (for example, the network 162 or the first network 412).

According to an embodiment, when the electronic device registers the user information, the electronic device may register the user information by area, branch, shop, and distance range according to user selection. During the registration, at least one area, branch, shop, and distance range may be set per service.

In operation 1430, for example, the electronic device may broadcast the registered user information periodically or aperiodically.

According to an embodiment, the electronic device may advertise the identification information corresponding to the electronic device (or the order service) included in the registered user information.

In operation 1440, for example, the electronic device may determine whether a response message has been received in response to the broadcast user information. Upon receipt of the response message, the electronic device may perform operation 1450, and if the electronic device has not received the response message, the electronic device may repeat operation 1430.

According to an embodiment, the received response message may include connection information about the electronic device and information about the order service.

In operation 1450, for example, the electronic device may acquire information about the order service (for example, action information about the service type and order-related information) from the received response message.

According to an embodiment, the acquired order-related information may include at least one of order detail information, payment information corresponding to order details, and event/coupon information, provided by a service provider (for example, the service provider) set by area, branch, shop, and distance range during registration of the user information. For example, the user may check an order number and order details received from the service provider 402 and receive goods and/or a service corresponding to the order details.

In operation 1460, for example, the electronic device may execute an order-related application based on the acquired order service information.

According to an embodiment, the electronic device may check action information (for example, a payment action and an event/coupon information acquisition action) about the order service using the information about the order service.

According to an embodiment, the electronic device may execute an application (for example, a payment application and an event/coupon providing application) corresponding to the checked action (for example, the payment action and the event/coupon information acquisition action).

According to an embodiment, upon execution of the order-related application, the electronic device may display order-related information received from the service provider 402 on a screen of the electronic device. For example, the order-related information may include at least one of an order number, order details, price information corresponding to the order details, and event/coupon information.

In operation 1470, for example, the electronic device may perform payment for the order using the acquired order-related information (for example, the at least one of the order number, the order details, the price information corresponding to the order details, and the event/coupon information). Also, the electronic device may receive the event/coupon information corresponding to the order using the order-related information. The electronic device may perform payment using the received event/coupon information.

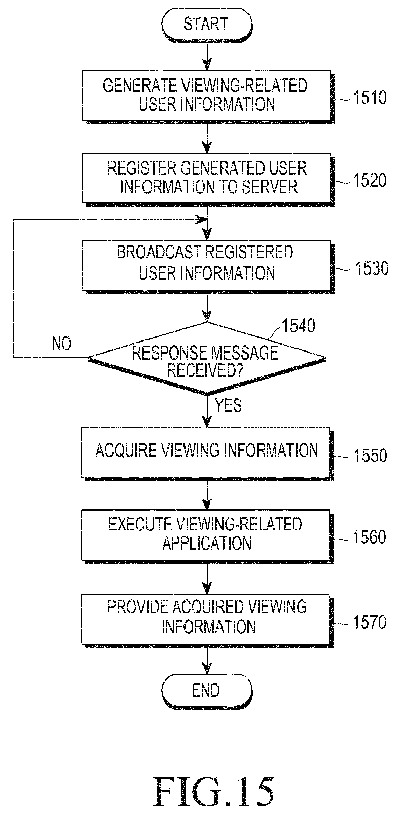

FIG. 15 illustrates a method for providing information about a viewing information providing service in an electronic device according to an embodiment of the present disclosure. The method for providing information about a viewing information providing service in an electronic device may include operations 1510 to 1570. The method for providing information about a viewing information providing service in an electronic device may be performed by at least one of an electronic device (for example, the electronic device 401 or 501), a processor (the processor 120 or 210) of the electronic device, and a control module (for example, the control module 520) of the electronic device.

In operation 1510, for example, the electronic device may generate user information related to providing of viewing information.

According to an embodiment, the user information related to providing of viewing information may include identification information about the electronic device (or the viewing information providing service), connection information, and detailed information about the viewing information providing service (for example, service type information and user-set registration setting information).

In operation 1520, for example, the electronic device may register the generated user information to a predetermined viewing information providing-related server (for example, the server 406) through a predetermined network (for example, the network 162 or the first network 412).

According to an embodiment, when the electronic device registers the user information, the electronic device may register the user information by area, branch, shop, and distance range according to user selection. During the registration, at least one area, branch, shop, and distance range may be set per service.

In operation 1530, for example, the electronic device may broadcast the registered user information periodically or aperiodically.

According to an embodiment, the electronic device may advertise the identification information corresponding to the electronic device (or the viewing information providing service) included in the registered user information.

In operation 1540, for example, the electronic device may determine whether a response message has been received in response to the broadcast user information. Upon receipt of the response message, the electronic device may perform operation 1550, and if the electronic device has not received the response message, the electronic device may repeat operation 1530.

According to an embodiment, the received response message may include connection information about the electronic device and information about the viewing information providing service.

In operation 1550, for example, the electronic device may acquire information about the viewing information providing service (for example, action information about the service type and viewing information) from the received response message.

According to an embodiment, the acquired viewing information may include at least one of visual information and auditory information about an object to be viewed, provided by a service provider (for example, the service provider 402) set by area, branch, shop, and distance range during registration of the user information. For example, the viewing information may include at least one of a detailed description, picture, symbol, text, video, and voice data of the object to be viewed.

In operation 1560, for example, the electronic device may execute an application related to providing of viewing information based on the acquired information about the viewing information providing service.

According to an embodiment, the electronic device may check action information (for example, a viewing information acquisition action) about the viewing information providing service using the information about the viewing information providing service.

According to an embodiment, the electronic device may execute (perform) an application (for example, a viewing information providing application) corresponding to the checked action information (viewing information acquisition action).

In operation 1570, for example, the electronic device may provide the acquired viewing information (for example, the at least one of the detailed description, picture, symbol, text, video, and voice data of the object to be viewed) through the executed viewing information providing application.

According to an embodiment, the electronic device may display the viewing information received from the service provider 402 on a screen of the electronic device, or reproduce a viewing-related video and/or viewing-related voice data. For example, when the electronic device is close to the object to be viewed, the electronic device may receive and display detailed information about the object to be viewed, or provide the viewing information to a user by reproducing the viewing-related video and/or voice file.

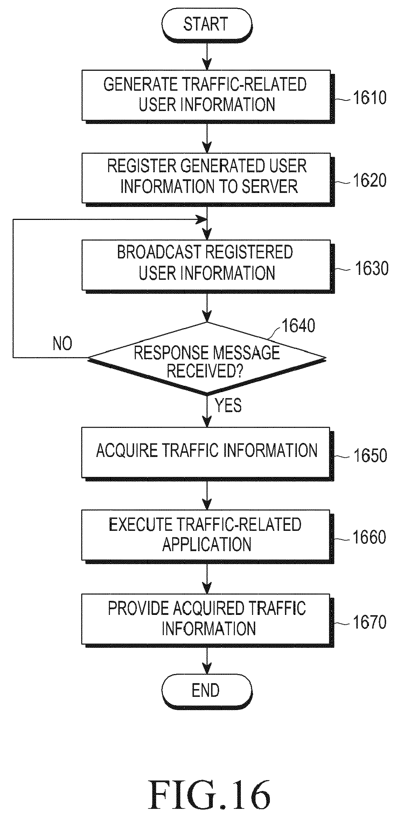

FIG. 16 illustrates a method for providing information about a traffic information providing service in an electronic device according to an embodiment of the present disclosure. The method for providing information about a traffic information providing service in an electronic device may include operations 1610 to 1670. The method for providing information about a traffic information providing service in an electronic device may be performed by at least one of an electronic device (for example, the electronic device 401 or 501), a processor (the processor 120 or 210) of the electronic device, and a control module (for example, the control module 520) of the electronic device.

In operation 1610, for example, the electronic device may generate user information related to traffic information providing.

According to an embodiment, the user information related to the traffic information providing may include identification information about the electronic device (or the traffic information providing service), connection information, and detailed information about the traffic information providing service (for example, service type information and user-set registration setting information).

In operation 1620, for example, the electronic device may register the generated user information to a predetermined traffic information providing-related server (for example, the server 406) through a predetermined network (for example, the network 162 or the first network 412).

According to an embodiment, when the electronic device registers the user information, the electronic device may register the user information by area, branch, shop, and distance range according to user selection. During the registration, at least one area, branch, shop, and distance range may be set per service.

In operation 1630, for example, the electronic device may broadcast the registered user information periodically or aperiodically.

According to an embodiment, the electronic device may advertise the identification information corresponding to the electronic device (or the traffic information providing service) included in the registered user information.

In operation 1640, for example, the electronic device may determine whether a response message has been received in response to the broadcast user information. Upon receipt of the response message, the electronic device may perform operation 1650, and if the electronic device has not received the response message, the electronic device may repeat operation 1630.

According to an embodiment, the received response message may include connection information about the electronic device and information about the traffic information providing service.

In operation 1650, for example, the electronic device may acquire information about the traffic information providing service (for example, action information about the service type and traffic information) from the received response message.

According to an embodiment, the acquired traffic information may include at least one of visual information and auditory information about a traffic state, provided by a service provider (for example, the service provider 402) set by area, branch, shop, and distance range during registration of the user information. For example, the traffic information may include at least one of traffic state information, bus line information, bus location information, a bus operation interval, and the like.

In operation 1660, for example, the electronic device may execute (perform) an application related to providing of traffic information based on the acquired information about the traffic information providing service.

According to an embodiment, the electronic device may check action information (for example, a traffic information acquisition action) about the traffic information providing service using the information about the traffic information providing service.

According to an embodiment, the electronic device may execute (perform) an application (for example, a traffic information providing application) corresponding to the checked action information (traffic information acquisition action).

In operation 1670, for example, the electronic device may provide the acquired traffic information (for example, the at least one of the traffic state information, bus line information, bus location information, bus operation interval, and the like) through the executed traffic information providing application. For example, when the electronic device enters an area/branch/shop/distance range set by the user or if a specified time elapses, the electronic device may receive and display detailed information about a traffic state, or provide the traffic information to a user by reproducing the traffic-related video and/or voice file.

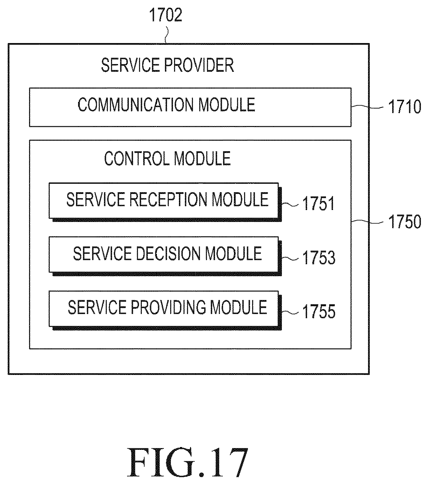

FIG. 17 is a block diagram of a service provider according to an embodiment of the present disclosure. A service provider 1702 may include the whole or part of the service provider 402 illustrated in FIG. 4.

Referring to FIG. 17, the service provider 1702 may include a communication module 1710 and a control module 1750. For example, the communication module 1710 may include at least part of the communication interface 1710 illustrated in FIG. 1 or the communication module 220 illustrated in FIG. 2. For example, the control module 1750 may include at least part of the processor 120 illustrated in FIG. 1 or the processor 210 illustrated in FIG. 2.

According to an embodiment, the communication module 1710 may conduct communication with a server (for example, the server 406) through a first network (for example, the network 162 or the first network 412) that provides a packet data-based service (or an IP-based service). According to an embodiment, the communication module 1710 may conduct communication with an electronic device (for example, the electronic device 501) through a second network (for example, by the short-range communication 164 or through the second network 414) that provides a short-range communication-based service.

According to an embodiment, the controller module 1750 may include a service reception module 1751, a service decision module 1753, and a service providing module 1755. According to an embodiment, the service reception module 1751 may receive a service request broadcast by the electronic device (for example, the electronic device 501) by short-range wireless communication through the communication module 1710.

According to an embodiment, the service reception module 1751 may broadcast information indicating one or more services. For example, the service reception module 1751 may broadcast information indicating one or more services which is provided by the service reception module 1751, alternately at least once during a predetermined time period (for example, one minute).

According to an embodiment, the service reception module 1751 may receive a service request for at least one of the one or more services from the electronic device (for example, the electronic device 501). According to an embodiment, upon receipt of a service request for a service from the electronic device (for example, the electronic device 501), the service reception module 1751 may discontinue broadcasting of the information indicating the one or more services, for example, temporarily.

According to an embodiment, the service decision module 1753 may determine information about a service corresponding to the location of the electronic device (for example, the electronic device 501) at least based on the service request received through the service reception module 1751. According to an embodiment, the service decision module 1753 may determine the location of the electronic device (for example, the electronic device 501). For example, the service decision module 1753 may receive location information about the electronic device 501 from the electronic device 501. Therefore, the service decision module 1753 may determine the location of the electronic device 501.

According to an embodiment, the service decision module 1753 may determine a service corresponding to the location of the electronic device (for example, the electronic device 501). For example, if the location of the electronic device 501 is a first location (for example, a coffee shop), the service decision module 1753 may determine a first service (for example, a coupon service available in the coffee shop). If the location of the electronic device 501 is a second location (for example, an airport), the service decision module 1753 may determine a second service (for example, an air ticket reservation service).

According to an embodiment, the service providing module 1755 may provide (for example, transmit) information about the service in relation to the service request received through the service reception module 1751 to the electronic device (for example, the electronic device 501), for example, through the communication module 1710.

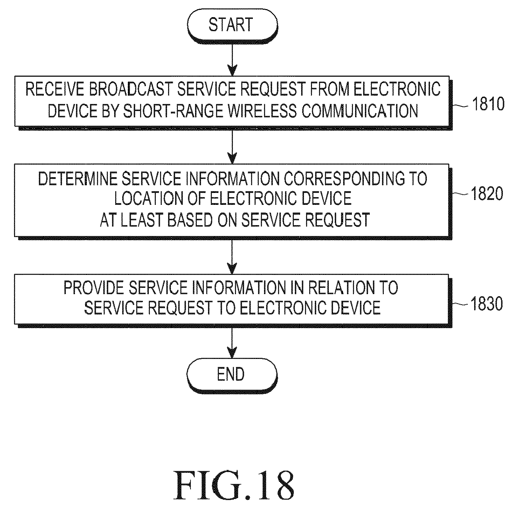

FIG. 18 illustrates a method for providing information about a service in a service provider according to an embodiment of the present disclosure. The method for providing information about a service in a service provider may include operations 1810, 1820, and 1830. The method for providing information about a service in a service provider may be performed by a service provider (for example, the service provider 1702), or a control module (for example, the processor 120 or 210, or the control module 1750) of the service provider.

In operation 1810, for example, the service provider may receive a service request for a service broadcasted from an electronic device (for example, the electronic device 501), by short-range wireless communication. For example, the service provider may broadcast information indicating one or more services to the electronic device (for example, the electronic device 501). The service provider may broadcast information indicating one or more services, alternately at least once during a predetermined time period. The service provider may receive a service request for at least one of the one or more services, broadcast by the electronic device (for example, the electronic device 501). Upon receipt of a service request for a service from the electronic device (for example, the electronic device 501), the service provider may discontinue broadcasting of the information indicating the one or more services, for example, at least temporarily.

In operation 1820, for example, the service provider may determine information about a service corresponding to the location of the electronic device (for example, the electronic device 501) at least based on the service request. The service provider may determine the location of the electronic device (for example, the electronic device 501). Therefore, the service provider may determine a service corresponding to the location of the electronic service (for example, the electronic device 501).

In operation 1830, for example, the service provider may provide (for example, transmit) information about the service in relation to the service request to the electronic device (for example, the electronic device 501).

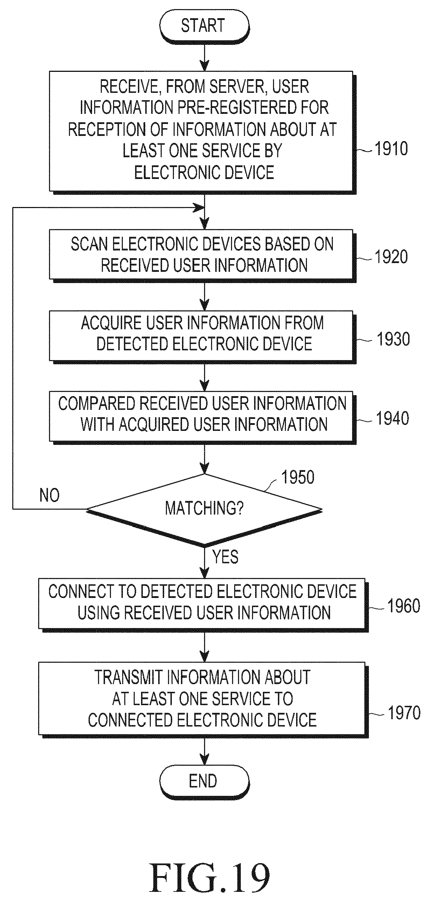

FIG. 19 illustrates a method for providing information about a service in a service provider according to an embodiment of the present disclosure. The method for providing information about a service in a service provider may include operations 1910 to 1970. The method for providing information about a service in a service provider may be performed by the service provider (for example, the service provider 1702), or a control module (for example, the processor 120 or 210, or the control module 1750) of the service provider.

In operation 1910, for example, the service provider may receive, from a server (for example, the server 406), user information which at least one electronic device (for example, the electronic device 501) has registered to the server 406 to receive information about at least one service, through a predetermined network (for example, the network 162 or the first network 412.

According to an embodiment, the service provider may receive user information about an electronic device (for example, the electronic device 501) (or a user information list) registered to the server 406 from the server 406 to which the service provider belongs, through a personal area network (PAN).

In operation 1920, for example, upon receipt of the user information (or the user information list), the service provider may periodically or aperiodically scan its neighborhood to discover the electronic device (for example, the electronic device 501) corresponding to the received user information.

In operation 1930, for example, upon discovery of at least one electronic device (for example, the electronic device 501), the service provider may acquire user information broadcast by the discovered electronic device (for example, the electronic device 501).

In operation 1940, for example, the service provider may compare the user information received from the server 406 with the user information acquired from the discovered electronic device (for example, the electronic device 501).

According to an embodiment, the service provider may compare identification information of the received user information with identification information of the acquired user information.

In operation 1950, for example, the service provider may determine whether the received user information matches the acquired user information. If the received user information matches the acquired user information, the service provider may perform operation 1960, and if the received user information does not match the acquired user information, the service provider may return to operation 1920 and repeat the subsequent operations.

In operation 1960, for example, the service provider may connect to the discovered electronic device (for example, the electronic device 501) using the received user information (for example, connection information corresponding to the identification information in the received user information).

According to an embodiment, the service provider may transmit a connection request message including connection information corresponding to the matching identification information to the electronic device (for example, the electronic device 501). The electronic device 501 may determine whether to connect based on the connection information included in the connection request message. The electronic device 501 may generate a connection request response message including one of connection accept information and connection reject information according to a result of the determination and transmit the connection request response message to the service provider.

According to an embodiment, the service provider may receive the connection request response message including one of connection accept information and connection reject information from the electronic device (for example, the electronic device 501). Upon receipt of the connection request response message including connection accept information, the service provider may perform connection with the electronic device 501. On the contrary, upon receipt of the connection request response message including connection reject information, the service provider may not perform connection with the electronic device 501.

According to an embodiment, when a connection is established between the service provider and the electronic device (for example, the electronic device 501), the service provider may transmit, to the electronic device (for example, the electronic device 501), information about at least one service (for example, action information corresponding to the at least one service type and corresponding service-related information) based on the received user information (for example, detailed information about the at least one service) through a predetermined network (for example, by the short-range wireless communication 164 or through the second network 414). The electronic device 501 may provide the service-related information to the user by executing an action corresponding to the service type based on the information about the at least one service, received from the service provider.

In operation 1970, for example, if the identification information of the received user information matches the identification information of the acquired user information, the service provider may transmit, to the electronic device (for example, the electronic device 501), information about the at least one service (for example, action information corresponding to the at least one service type and corresponding service-related information) based on the received user information (for example, detailed information about the at least one service) through a predetermined network (for example, by the short-range wireless communication 164 or through the second network 414).

According to an embodiment, even though the service provider is not connected to the electronic device (for example, the electronic device 501), if the identification information of the received user information matches the identification information of the discovered user information, the service provider may transmit, to the discovered electronic device (for example, the electronic device 501), information about at least one service based on the user information received from the server 406 (for example, detailed information about the at least one service).

According to an embodiment, the service provider may detect user information broadcast by an unspecified electronic device. For example, upon receipt of user information from the unspecified electronic device, the service provider may connect to the server 406 and access service information of the electronic device transmitting the user information or a user of the electronic device, using at least part of the user information. For example, the server 406 may store a service ID representing information about at least one of the electronic device, the user, or a service. The service provider may, for example, determine a service to be provided to the electronic device based on the service ID.

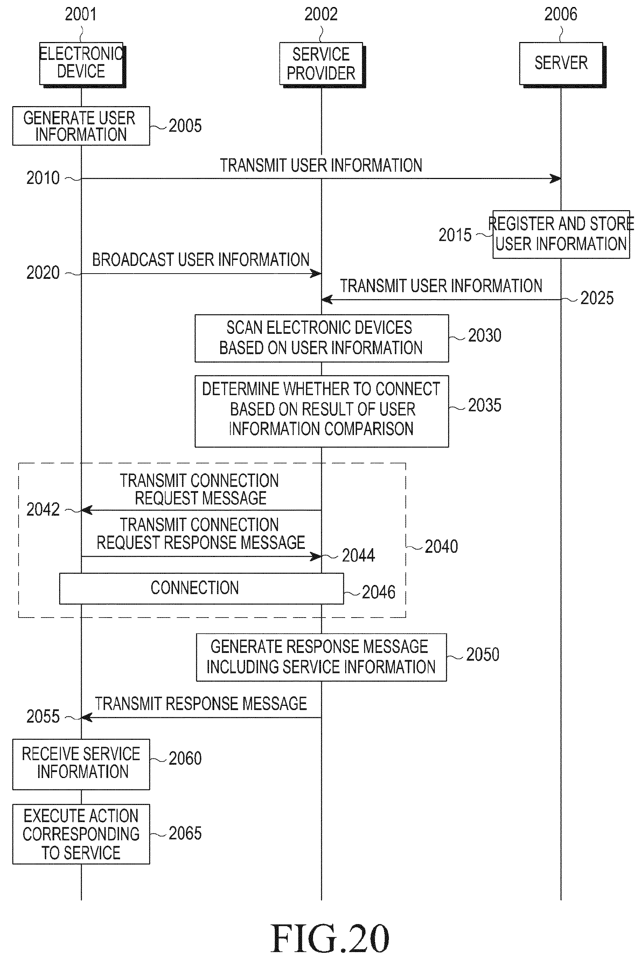

FIG. 20 illustrates a method for providing service information in a service information providing system according to an embodiment of the present disclosure. An electronic device 2001 may include the whole or part of the electronic device 501 illustrated in FIG. 5. A service provider 2002 may include the whole or part of the service provider 1702 illustrated in FIG. 17. A server 2006 may include the whole or part of the server 406 illustrated in FIG. 4. The method for providing service information in a service information providing system may include operation 2005 to operation 2065. The method for providing service information in a service information providing system may be performed by at least one of an electronic device (for example, the electronic device 2001), a processor (for example, the processor 120 or 210) of the electronic device, and a control module (for example, the control module 520) of the electronic device. The method for providing service information in a service information providing system may be performed by a service provider (for example, the service provider 2002), a processor (for example, the processor 120 or 210) of the service provider, and a control module (for example, the control module 1750) of the service provider. The method for providing service information in a service information providing system may be performed by at least one of a server (for example, the server 2006), a processor of the server, and a control module of the server.

In operation 2005, for example, the electronic device 2001 may generate user information corresponding to at least one service.

In operation 2010, for example, the electronic device 2001 may transmit and register the generated user information to the server 2006 through a predetermined network (for example, the network 162 or the first network 412).

According to an embodiment, the user information may include identification information about the electronic device 2001, connection information about the electronic device 2001, and detailed information about the at least one service.

In operation 2015, for example, the server 2006 may register and store the user information received from the electronic device 2001 through the predetermined network (for example, the network 162 or the first network 412).

According to an embodiment, the server 2006 may separately store the user information registered by the at least one electronic device 2001. The server 2006 may generate and store a user information list based on the user information registered by the at least one electronic device 2001.

In operation 2020, for example, the electronic device 2001 may broadcast the registered user information.

According to an embodiment, the electronic device 2001 may advertise the identification information about the electronic device 2001 included in the registered user information, periodically or aperiodically.

In operation 2025, for example, the server 2006 may transmit the user information registered by the electronic device 2001 to the service provider 2002 through a predetermined network (for example, the network 162 or the first network 412). The server 2006 may transmit the user information list generated based on the user information registered by the at least one electronic device 2001 to the service provider 2002 through the predetermined network (for example, the network 162 or the first network 412).

In operation 2030, for example, upon receipt of the user information about the at least one electronic device 2001 (or the user information list) through the predetermined network (for example, the network 162 or the first network 412), the service provider 2002 may scan its neighborhood to discover the at least one electronic device 2001 corresponding to the received user information.

In operation 2035, for example, upon detection of the user information broadcast by the at least one electronic device 2001, the service provider 2002 may determine whether the user information received from the server 2006 matches the detected user information.

According to an embodiment, the service provider 2002 may determine whether the user information received from the server 2006 matches the detected user information by comparing identification information included in the received user information with identification information included in the detected user information.

In operation 2040, for example, the electronic device 2001 may determine whether to connect to the service provider 2008 according to a result of the determination. The connection control operation 2040 will be described below in greater detail with reference to operations 2042 to 2046.

In operation 2042, for example, if the identification information included in the received user information matches the identification information included in the detected user information, the service provider 2002 may request connection to the electronic device 2001. For example, the service provider 2002 may transmit a connection request message including connection information corresponding to the matching identification information in the received user information to the electronic device 2001.

In operation 2044, upon receipt of the connection request message from the service provider 2002, the electronic device 2001 may transmit a connection request response message to the service provider 2002 in response to the connection request message. For example, the electronic device 2001 may determine whether the connection information received from the service provider 2002 is valid by comparing the connection information included in the connection request message with the connection information registered to the server 2006. The electronic device 2001 may determine whether to connect to the service provider 2002 based on the determination as to the validity of the connection information included in the connection request message. The electronic device 2001 may generate a connection request response message including at least one of connection accept information and connection reject information according to the result of the determination and transmit the connection request response message to the service provider 2002.

For example, if the connection information received from the service provider 2002 matches the registered connection information, the electronic device 2001 may generate a connection request response message including connection accept information indicating that the connection request is accepted, determining that the connection information received from the service provider 2002 is valid, and then transmit the connection request response message to the service provider 2002. On the contrary, if the connection information received from the service provider 2002 does not match the registered connection information, the electronic device 2001 may generate a connection request response message including connection reject information indicating that the connection request is rejected, determining that the connection information received from the service provider 2002 is not valid, and then transmit the connection request response message to the service provider 2002.

In operation 2046, for example, if the electronic device 2001 generates the connection request response message including the connection accept information, the electronic device 2001 may perform connection with the service provider 2002. If the electronic device 2001 generates the connection request response message including the connection reject information, the electronic device 2001 may not perform connection with the service provider 2002.

According to an embodiment, the connection control operation 2040 may not be performed.

In operation 2050, for example, if identification information of the received user information matches identification information of the detected user information, the electronic device 2001 may generate a response message corresponding to at least one service based on the user information (for example, detailed information about the at least one service) received from the server 2006.

In operation 2055, for example, the service provider 2002 may transmit a response signal including the response message to the electronic device 2001 through a predetermined network (for example, by the short-range communication 164 or through the second network 414).

According to an embodiment, the response message may include information about the at least one service.

In operation 2060, for example, the electronic device 2001 may acquire information about the at least one service from the received response message.

In operation 2065, for example, the electronic device 2001 may execute at least one action corresponding to the at least one service type based on information about the at least one service (for example, action information corresponding to the at least one service type) received from the service provider 2002.

According to an embodiment, the at least one action information may include a connectivity action with at least one external electronic device, a payment action, an action of acquiring information such as viewing information or traffic information, and the like. However, the action information is not limited thereto, and may include various actions executed in correspondence with information about the at least one service to be received by the electronic device. According to an embodiment, the various actions may be executed using resources (for example, an application, a camera, a motion sensor, a biometric sensor, an I/O device, power, a processor, a memory, or the like) provided by at least one of other electronic devices (for example, an accessory device connected to the electronic device 2001, the service provider 2002, or the server 2006).

According to various embodiments, in a computer-readable recording medium storing instructions, the instructions may be configured to, when executed by at least one processor, control the at least one processor to perform at least one operation. The at least one operation may include broadcasting a service request for a service by short-range wireless communication in an electronic device (for example, the electronic device 501), receiving service information corresponding to the service from at least one external electronic device (for example, the service provider 402) receiving the service request, and executing at least one function related to the service at least based on the service information.

According to various embodiments, the at least one operation may further include registering a service ID corresponding to the service to a server.

According to various embodiments, the registration may include connecting the electronic device to the server by communication other than short-range wireless communication.

According to various embodiments, the service request may be broadcast as at least part of beacon information.

According to various embodiments, the at least one operation may further include detecting a message broadcast by the at least one external electronic device.

According to various embodiments, one of the broadcasting and the detection may be switched to the other of the broadcasting and the detection based on a determination that state information related to the electronic device satisfies a specific condition.

According to various embodiments, the detection may be performed alternately with the broadcasting at least once during a specified time period.

According to various embodiments, the service request may be broadcast at least based on a determination that state information related to the electronic device satisfies a specified condition.

According to various embodiments, the predetermined condition may include a position, a motion, a time, a user schedule, or a combination of two or more of the position, the motion, the time, and the user schedule.

According to various embodiments, the broadcasting may include determining communication coverage in which the service request is to be transmitted, at least based on the state information.

According to various embodiments, the service request may be broadcast at least based on a determination that a specified application is executed in the electronic device.

According to various embodiments, the service request may include a plurality of requests may include a first request and a second request, and the first request and the second request may be broadcast in time division.

According to various embodiments, the service request may include a plurality of requests may include a first request and a second request, the first request may be broadcast with first power, and the second request may be broadcast with second power.

According to various embodiments, the electronic device may further include a first antenna and a second antenna, the service information may include a plurality of pieces of service information including first service information and second service information, and the reception may include including receiving the first service information through the first antenna and receiving the second service information through the second antenna.

According to various embodiments, the service information may include a plurality of pieces of service information including first service information and second service information, and the execution may include selecting at least one of the first service information and the second service information in relation to the at least one function.

According to various embodiments, the at least one external electronic device may include a plurality of external electronic devices including a first external electronic device and a second external electronic device, and the execution may include selecting at least one of the first external electronic device and the second external electronic device in relation to the function.

According to various embodiments, the execution may include accessing another external electronic device using the service information.

According to various embodiments, the at least one function may include electronic payment.

According to various embodiments, in a computer-readable recording medium storing instructions, the instructions may be configured to, when executed by at least one processor, control the at least one processor to perform at least one operation. The at least one operation may include receiving a service request for a service broadcast from an external electronic device (for example, the electronic device 501) by short-range communication in an electronic device (for example, the service provider 1702), determining service information corresponding to a location of the external electronic device at least based on the service request, and providing the service information to the external electronic device in relation to the service request.

According to various embodiments, the at least one operation may further include broadcasting information indicating at least one service which is provided by the electronic device in the electronic device.

According to various embodiments, the broadcasting may be performed alternately with the reception at least once during a specified time period.

According to various embodiments, the broadcasting may be discontinued at least based on a determination that the service request has been received.

According to various embodiments, the determination may include acquiring a first service ID from the service request.

According to various embodiments, the determination may include determining whether the first service ID matches a second service ID registered to a server by the external electronic device before the broadcasting.

According to various embodiments, the service request may include a plurality of requests, and the determination may include selecting at least a part of the plurality of requests at least based on state information about the electronic device.

According to various embodiments, the at least one operation may further include receiving the plurality of requests from an external electronic device corresponding to the selected part of the plurality of requests from among a plurality of external electronic devices including the external electronic device.

According to various embodiments, the providing may include transmitting authentication information to be used for the external electronic device to connect to another external electronic device.

According to various embodiments, the providing may include wirelessly transmitting power to the external electronic device through the electronic device or another electronic device connected to the electronic device.

As is apparent from the foregoing description, according to various embodiments of the present disclosure, for example, an electronic device does not need for scanning adjacent service providers to acquire service information about a service provided by a service provider. Therefore, resource consumption needed for the scanning as well as battery consumption can be reduced.

Also, for example, since the electronic device does not need to transmit an ID provided by a service provider to a server through a network including the service provider, location information about a user of the electronic device may be protected, thereby reinforcing security.

Also, for example, the electronic device can acquire information about at least one service from a service provider by short-range communication. Accordingly, a service providing speed can be increased and the electronic device can acquire the information about the at least one service from the service provider without a network connection with the server.

The term 'module' as used herein may include its ordinary meaning including, for example, a unit of one, or a combination of two or more of hardware, software, and firmware. The term 'module' may be used interchangeably with terms such as, for example, unit, logic, logical block, component or circuit. A 'module' may be the smallest unit of an integrated part or a portion thereof. A 'module' may be the smallest unit for performing one or more functions, or a portion thereof. A 'module' may be implemented mechanically, or electronically. For example, a 'module' may include at least one of an application-specific integrated circuit (ASIC) chip, a field-programmable gate array (FPGA), or a programmable logic device that perform certain operations.

At least a part of apparatuses (for example, modules or their functions) or methods (for example, operations) according to various embodiments may be implemented as commands stored in a computer-readable storage medium, in the form of a programming module. When the commands are executed by a processor (for example, the processor 120), one or more processors may execute functions corresponding to the commands. The computer-readable storage medium may be, for example, the memory 130.

The computer-readable medium may include hard disk, floppy disk, magnetic media (for example, magnetic tape), optical media (for example, compact disc read-only memory (CD-ROM)), digital versatile disc (DVD), magneto-optical media (for example, floptical disk), hardware devices (for example, read-only memory (ROM), random access memory (RAM) or flash memory)), and the like. Program instructions may include machine language code that are produced by a compiler or high-level language code that may be executed by a computer using an interpreter. The functionalities of hardware discussed above may be implemented as one or more software modules, and vice versa in order to perform an operation according to various embodiments.

A module or a programming module according to various embodiments may include one or more of the above-described components, may omit a portion thereof, or may include additional components. Operations that are performed by a module, a programming module or other components according to the present disclosure may be processed in a serial, parallel, repetitive or heuristic manner. Also, some operations may be performed in a different order or omitted, or additional operations may be added.

Although the present disclosure has been described with embodiments, various changes and modifications may be suggested to one skilled in the art. It is intended that the present disclosure encompass such changes and modifications as fall within the scope of the appended claims.

## Claims

1. An electronic device (401) comprising:
a communication module (170) configured to provide short-range wireless communication; and
a controller (120) configured to:
broadcast a service request for a service by short-range wireless communication through the communication module,
receive, from at least one external electronic device (406) receiving the service request, service information corresponding to the service and
execute at least one function related to the service based on at least one piece of the service information.

2. The electronic device of claim 1, wherein the controller is configured to register a service identifier (ID) corresponding to the service in a server.

3. The electronic device of claim 2, wherein the controller is configured to be connected to the server by communication other than short-range wireless communication.

4. The electronic device of claim 1, wherein the controller is configured to detect a message broadcast by the at least one external electronic device.

5. The electronic device of claim 4, wherein the controller is configured to switch one of the broadcasting of the service request and the detecting of the message to the other of the broadcasting and the detection based on a determination that state information related to the electronic device satisfies a specified condition.

6. The electronic device of claim 1,
wherein the controller is configured to broadcast the service request based on a determinati on that state information related to the electronic device satisfies a specified condition,
wherein the specified condition includes a position, a motion, a time, a user schedule, or a combination of two or more of the position, the motion, the time, and the user schedule.

7. The electronic device of claim 6, wherein the controller is configured to determine communication coverage in which the service request is to be transmitted, based on at least one piece of the state information.

8. The electronic device of claim 1, wherein the service request includes a plurality of requests including a first request and a second request, and
wherein the controller is configured to broadcast the first request with first power and broadcast the second request with second power.

9. The electronic device of claim 1, further comprising a first antenna (228) and a second antenna (225),
wherein the service information includes a plurality of pieces of service information including first service information and second service information, and
wherein the controller is configured to receive the first service information through the first antenna and receive the second service information through the second antenna.

10. The electronic device of claim 1, wherein the controller is configured to access another external electronic device (402) using the service information.

11. An electronic device (402) comprising:
a communication module (1710) for providing short-range wireless communication; and
a controller (1750) is configured to
receive a service request for a service broadcasted from an external electronic device by short-range communication through the communication module,
determine service information corresponding to a location of the external electronic device based on the service request, and
provide the service information to the external electronic device in relation to the service request.

12. The electronic device of claim 11, wherein the controller is configured to broadcast information indicating at least one service which is provided by the electronic device.

13. The electronic device of claim 11, wherein the controller is configured to alternately perform broadcasting of the information indicating the at least one service which is provided by the electronic device and receiving of the service request, at least once during a predetermined time period.

14. A non-transitory computer-readable medium embodying a program to be executed by a computer (520), the program including instructions configured to control an electronic device to perform:
broadcasting (610) a service request for a service by short-range wireless communication;
receiving (620), from at least one external electronic device (402) receiving the service request, service information corresponding to the service; and
executing (630) at least one function related to the service based on at least one piece of the service information.

15. A non-transitory computer-readable medium embodying a program to be executed by a computer (1750), the program including instructions configured to control an electronic device to perform:
receiving (1810) a service request for a service broadcasted from an external electronic device (501) by short-range communication;
determining (1820) service information corresponding to a location of the external electronic device based on the service request; and
providing (1830) the service information to the external electronic device in relation to the service request.
